# EUROPÄISCHE PATENTSCHRIFT

(11) **EP 2 912 237 B1**
(45) Veröffentlichungstag und Bekanntmachung des Hinweises auf die Patenterteilung: **23.03.2022**
(21) Anmeldenummer: 13785337.0
(22) Anmeldetag: 22.10.2013
(51) Int. Cl.: E04B 2/74, E04B 1/61, E04H 1/12, F16B 5/00

(54) **BAUSATZ AUS WANDELEMENTEN UND ZWISCHEN SOLCHEN EINZUFÜGENDEN VERBINDERN ZUR ERRICHTUNG VON RAUMTEILERN**
CONSTRUCTION KIT CONSISTING OF WALL ELEMENTS AND CONNECTORS TO BE INSERTED THEREBETWEEN IN ORDER TO ERECT ROOM DIVIDERS
MODULE DE CONSTRUCTION CONSTITUÉ D'ÉLÉMENTS DE PAROI ET D'ÉLÉMENTS DE LIAISON À INSÉRER ENTRE CES ÉLÉMENTS DE PAROI POUR ÉLEVER DES CLOISONS

(30) Priorität: 23.10.2012 CH 20752012
(43) Veröffentlichungstag der Anmeldung: 02.09.2015
(73) Patentinhaber: Vitra AG, 4127 Birsfelden (CH)
(72) Erfinder: LÖFFLER, Jürgen, 79282 Ballrechten-Dottingen (DE); MEYER, Klaus, 79618 Rheinfelden (DE)
(74) Vertreter: Latscha Schöllhorn Partner AG
(86) Internationale Anmeldenummer: PCT/CH2013/000182
(87) Internationale Veröffentlichungsnummer: WO 2014/063263

(56) Entgegenhaltungen:
- WO-A1-98/34032
- DE-C- 909 036
- US-A- 4 867 320
- US-A- 4 928 465
- US-A- 5 272 000

## Beschreibung

### Anwendungsgebiet der Erfindung

Die vorliegende Erfindung betrifft einen Bausatz aus Wandelementen und zwischen solchen einzufügenden Verbindern, um verschieden dimensionierte und konfigurierte Raumteiler zu erstellen.

### Stand der Technik

Zusammensetzbare Wandelemente für den Messe- und Ladenbau sowie als Raumteiler, z.B. in Büros, sind beispielsweise aus der US 4,928,465 A vielfach bekannt. Auch sind z.B. aus der DE 909 036 C, der WO 98/34032 A1 sowie aus der US 4,867,320 A Einrichtungen zur Verbindung von Bauplatten bekannt.

### Aufgabe der Erfindung

Ausgehend vom insoweit vorbekannten Stand der Technik liegt der Erfindung die Aufgabe zugrunde, ein System von Wandelementen mit zugehörigen Verbindern zu schaffen, mit dem sich unter den Aspekten des effizienten Materialeinsatzes, der produktiven Montage und Ermöglichung ästhetischer Formgestaltung sehr individuell angepasste Raumteiler und Arbeitskabinen errichten lassen.

### Übersicht über die Erfindung

Der Bausatz aus Wandelementen und zwischen solchen einzufügenden Verbindern ist zur Errichtung von Raumteilern konzipiert. Die Wandelemente sind durch Verpressen von Fasermaterial hergestellt und besitzen zumindest eine Anschlussflanke, die systematisch mit Konturen versehen ist. Die Verbinder sind als Profilschiene ausgebildet, an welcher zumindest ein Anschluss vorhanden ist, der systematisch angeordnete Gegenkonturen besitzt. Die Konturen an den Wandelementen lassen sich mit den Gegenkonturen an den Verbindern in formschlüssigen Eingriff bringen. Die Konturen an den Anschlussflanken der Wandelemente sind kongruent auf deren Frontseite und Rückseite angeordnet und als erhabene Stege ausgebildet, die auf einer vertikalen Linie mit alternierenden Zwischenräumen verlaufen. Die Verbinder besitzen an zwei sich gegenüberliegenden Aussenkanten jeweils einen Anschluss mit den systematischen Gegenkonturen. Die Gegenkonturen sind als erhabene paarweise Stege ausgebildet, welche auf einer vertikalen Linie mit alternierenden Zwischenräumen verlaufen und die seitliche Mündung einer vertikalen Nut verengen. Die Konturen erheben sich von einer Lippe, die sich von der Anschlussflanke erstreckt, wobei die Breite der Lippe im Mündungsspalt der Gegenkonturen Platz findet. Die Dimensionierung der Konturen erlaubt deren Einschieben durch die Zwischenräume am Verbinder.

Nachfolgend werden spezielle Ausführungsformen der Erfindung definiert. Das zur Herstellung der Wandelemente verwendete Fasermaterial ist ein verdichtetes Polyestervlies oder eine Mischung aus Natur- und synthetischen Fasern. Der Verbinder ist ein Strangpressprofil, vorzugsweise aus Aluminium.

Bei den Wandelementen, welche zum Einbau innerhalb eines Raumteilers dienen, sind alle vertikalen Aussenkanten als Anschlussflanken mit den systematischen Konturen ausgebildet, wobei sich zwischen den Anschlussflanken eine Wandung erstreckt.

Ein separater Typ von Wandelementen ist zum äusseren Abschluss an Raumteilern bestimmt, der nur an einer Aussenkante als Anschlussflanke mit den systematischen Konturen ausgebildet ist, wobei sich an die eine Anschlussflanke ein Flügelabschnitt anschliesst, der seitlich frei endet. Das verwendete Fasermaterial lässt sich durchfärben.

Der Bausatz umfasst an Wandelementen zumindest:
a) ein erstes Wandelement mit gerader Erstreckung bezüglich der Vertikalebene;
b) ein zweites Wandelement mit erster Krümmung bezüglich der Vertikalebene;
c) ein drittes Wandelement mit zweiter Krümmung bezüglich der Vertikalebene; und
d) ein viertes im Prinzip drei-flügliges Wandelement mit drei Anschlussflanken, wobei das erste bis dritte Wandelement mit einer Oberkante abschliesst.

Das vierte Wandelement besteht aus drei aneinandergefügten Teilelementen, welche sich aus der theoretischen vertikalen Halbierung der Dicke der übrigen Wandelemente ergeben und oben mit einer Teilkante abschliessen. An seinen drei Flügeln ist jeweils eine komplette Abschlussflanke mit den beidseitigen Konturen und einem kompletten, sich zum Elementezentrum erstreckenden Wandungsabschnitt vorhanden. Entlang des Wandungsabschnitts ergibt sich eine konturierte komplette Oberkante, und im Elementezentrum entsteht ein im Prinzip dreiecksförmiger Freiraum.

Die Oberkanten an den ersten bis dritten Wandelementen sowie die am vierten Wandelement aus zwei Teilkanten zusammengefügte Oberkante ist nachbearbeitungsfrei beim Pressvorgang erzeugt.

Am vierten Wandelement spannt ein Flügel, welcher von der zugehörigen Anschlussflanke und dem sich davon fortsetzenden Wandungsabschnitt gebildet wird, jeweils zusammen mit einem benachbarten Flügel einen gleichgrossen ersten Winkel auf, während die beiden benachbarten Flügel zusammen einen anders dimensionierten zweiten Winkel aufspannen.

Die ersten bis dritten Wandelemente und das Teilelement enthalten insbesondere in der Horizontalebene wirkende Versteifungsmittel. Die Versteifungsmittel sind durch materialverdichtendes Einpressen mit dem Ergebnis linienförmig und horizontal verlaufender Nuten über die Wandung bzw. Teilwandung erzeugt. Die Versteifungsmittel an den ersten bis dritten Wandelementen sind auf der Frontseite und auf der Rückseite zueinander kongruent und im gleichen Raster wie die Konturen angebracht. Hingegen sind die Versteifungsmittel am Teilelement nur einseitig und im gleichen Raster wie die Teilkonturen vorgesehen.

Mit den Wandelementen und Verbindern lassen sich errichten:
a) gerade, einfach oder mehrfach gekrümmte Raumteiler; und/oder
b) einzelne Kabinen; und/oder
c) zusammenhängende Kabinen; und
d) Kombinationen von Raumteilern und Kabinen.

An den Verbindern kann man fixierbare Adapter anordnen, welche zur Abstützung von Tragflächen und/oder Sitzen dienen.

Ein Adapter besteht aus einem Basisteil mit einer ersten Hakenkontur und einem separaten Gegenstück mit einer zweiten Hakenkontur. Im montierten Zustand sind Basisteil und Gegenstück miteinander verbunden, wobei deren erste Hakenkontur und zweite Hakenkontur zum Eingriff in den Zwischenraum am Verbinder bestimmt sind.

Der Bausatz umfasst ferner Stützen, welche den Wandelementen, aus den der Raumteiler zu errichten ist, vorzugsweise in das Innere des Raumteilers vorgesetzt sind, wobei die einzelne Stütze aufweist:
a) ein profiliertes Rohrstück mit einer Rückseite und einer Frontseite, die miteinander durch einen Mittelsteg verbunden sind;
b) auf der Rückseite ein doppelreihiges Schlitzraster, wobei jeweils die zwei Schlitze eines Paars auf gleicher Höhe liegen;
c) im Mittelsteg einen die Stütze durchlaufenden Schraubkanal, welcher zur Befestigung einer Bodenbaugruppe nutzbar ist; und
d) eine Bodenbaugruppe umfasst ein auf einem Bolzen in der Höhe nivellierbares Bodenelement sowie ein quaderförmiges Fügeteil, welches man auf das untere Ende der Stütze aufsteckt, wobei ein Gewindeteil des Bolzens zum Eingriff in den Schraubkanal bestimmt ist.

Der Adapter ist mit einer Brückenstrebe verbindbar, und zwischen zwei Brückenstreben ist eine Längsstrebe einfügbar, so dass ein Gerüst entsteht, welches zur Abstützung von Tragflächen und/oder Sitzen dient. Die beiden Hakenkonturen eines Adapters sind zum Eingriff in die beiden Schlitze eines für die gewünschte Höhe ausgewählten Paars am Schlitzraster der Stütze bestimmt und im montierten Zustand darin klauenförmig verkrallt. Die an den Stützen angedockten Adapter dienen zur Halterung von Tragflächen, wobei diese Tragflächen als Arbeitsfläche und/oder Ablage oder zum Anbau von Schrankeinheiten nutzbar sind.

### Kurzbeschreibunq der beigefügten Zeichnungen

Es zeigen:
- Figur 1A: - ein erstes Wandelement, in Perspektivansicht;
- Figur 1B: - das vergrösserte Detail X1 aus Figur 1A;
- Figur 1C: - das Wandelement gemäss Figur 1A, in vergrösserter Draufsicht;
- Figur 1D: - das vergrösserte Detail X2 aus Figur 1C;
- Figur 2A: - ein zweites Wandelement, in Perspektivansicht;
- Figur 2B: - das vergrösserte Detail X3 aus Figur 2A;
- Figur 2C: - das Wandelement gemäss Figur 2A, in vergrösserter Draufsicht;
- Figur 3A: - ein drittes Wandelement, in Perspektivansicht;
- Figur 3B: - das vergrösserte Detail X4 aus Figur 3A;
- Figur 3C: - das Wandelement gemäss Figur 3A, in vergrösserter Draufsicht;
- Figur 4A: - ein viertes Wandelement, in Perspektivansicht;
- Figur 4B: - das vergrösserte Detail X5 aus Figur 4A, in geänderter Perspektive;
- Figur 4C: - das vierte Wandelement gemäss Figur 4A, in vergrösserter Draufsicht;
- Figur 4D: - ein Teilelement aus Figur 4A, in Draufsicht;
- Figur 4E: - das vergrösserte Detail X6 aus Figur 4D;
- Figur 5A: - ein Seitenelement, in Perspektivansicht;
- Figur 5B: - das vergrösserte Detail X7 aus Figur 5A, in geänderter Perspektive;
- Figur 5C: - das Seitenelement gemäss Figur 5A, in vergrösserter Draufsicht;
- Figur 6A: - einen Verbinder *erster Variante,* in Perspektivansicht;
- Figur 6B: - das vergrösserte Detail X8 aus Figur 6A;
- Figur 6C: - den Verbinder gemäss Figur 6A, in vergrösserter Draufsicht;
- Figur 6D: - einen Verbinder *zweiter Variante,* in Perspektivansicht;
- Figur 6E: - das vergrösserte Detail X9 aus Figur 6D;
- Figur 6F: - den Verbinder gemäss Figur 6D, in vergrösserter Draufsicht;

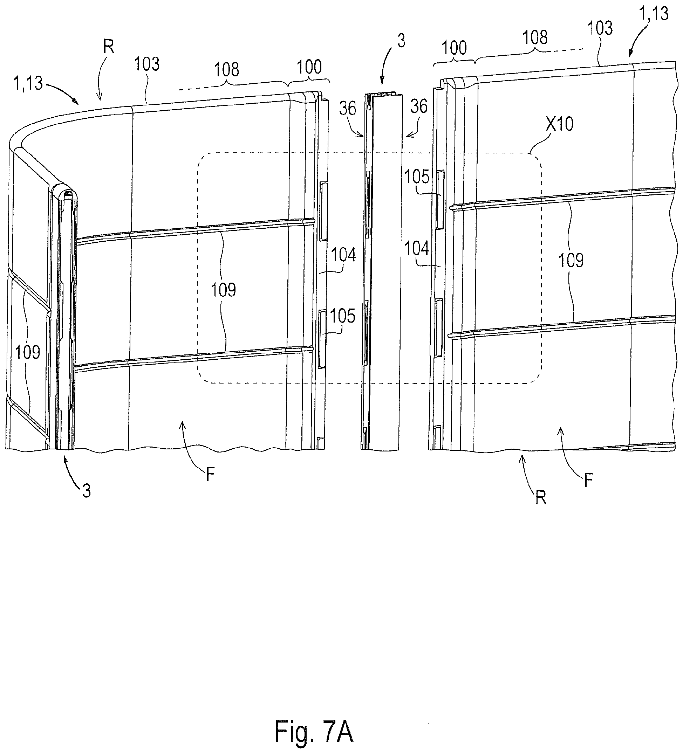

- Figur 7A: - zwei dritte Wandelemente gemäss Figur 3A, einem Verbinder gemäss Figur 6A angenähert, in Perspektivansicht;

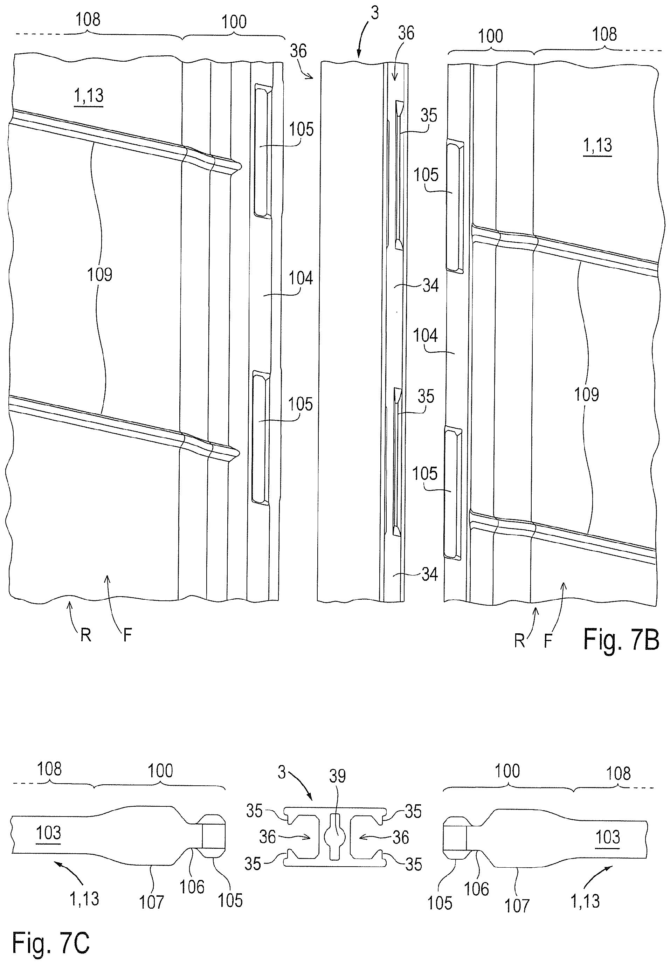

- Figur 7B: - das vergrösserte Detail X10 aus Figur 7A, in geänderter Perspektive;
- Figur 7C: - den Aufbau gemäss Figur 7A, in vergrösserter Draufsicht;

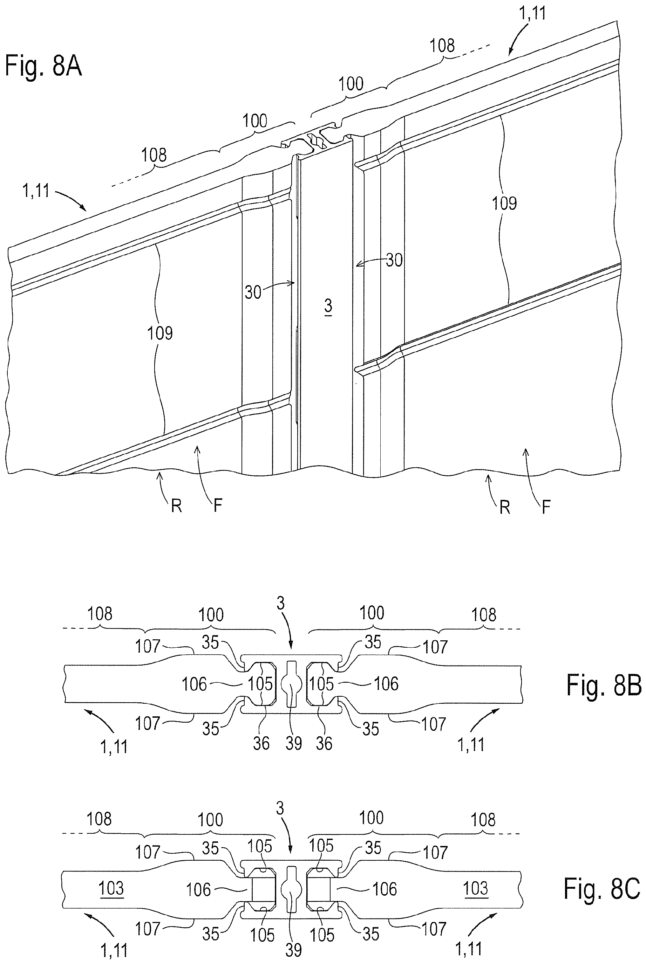

- Figur 8A: - zwei erste Wandelemente gemäss Figur 1A, am Verbinder gemäss Figur 6A angedockt, in perspektivischer Schnittansicht;
- Figur 8B: - den Aufbau gemäss Figur 8A, in vergrösserter Draufsicht;
- Figur 8C: - eine vergrösserte Draufsicht auf den vervollständigten Aufbau gemäss Figur 8A;
- Figur 9A: - ein erstes Wandelement gemäss Figur 1A, am Verbinder *erster Variante* gemäss Figur 6A angedockt, mit dem Verbinder angenäherter Abdeckbaugruppe *erster Variante,* in perspektivischer partieller Explosivansicht, als Ausschnitt;
- Figur 9B: - den Aufbau gemäss Figur 9A mit beidseits am Verbinder angedockten Wandelementen und montierter Abdeckbaugruppe, in geänderter Perspektivansicht;
- Figur 9C: - den Aufbau gemäss Figur 9A, mit montierter Abdeckbaugruppe, in Perspektivansicht;
- Figur 9D: - den Aufbau gemäss Figur 9A, mit dem Verbinder angenähertem Seitenelement gemäss Figur 5A, in gewechselter Perspektivansicht;
- Figur 9E: - den Aufbau gemäss Figur 9D, mit am Verbinder angedocktem Seitenelement und montierter Abdeckbaugruppe, in Perspektivansicht;
- Figur 9F: - ein erstes Wandelement gemäss Figur 1A, am Verbinder *zweiter Variante* gemäss Figur 6D angedockt, mit dem Verbinder angenäherter Abdeckbaugruppe *zweiter Variante,* in perspektivischer partieller Explosivansicht, als Ausschnitt;
- Figur 9G: - den Aufbau gemäss Figur 9F, mit montierter Abdeckbaugruppe, in Perspektivansicht;
- Figur 10A: - ein erstes Wandelement gemäss Figur 1A, am Verbinder gemäss Figur 6A angedockt, mit dem Verbinder angenäherter Fussbaugruppe *erster Variante,* in perspektivischer partieller Explosivansicht, als Ausschnitt;
- Figur 10B: - den Aufbau gemäss Figur 10A, mit montierter Fussbaugruppe, in Perspektivansicht;
- Figur 10C: - ein erstes Wandelement gemäss Figur 1A, am Verbinder gemäss Figur 6D angedockt, mit dem Verbinder angenäherter Fussbaugruppe *zweiter Variante,* in perspektivischer partieller Explosivansicht, als Ausschnitt;
- Figur 10D: - den Aufbau gemäss Figur 10C, mit montierter Fussbaugruppe, in Perspektivansicht;
- Figur 11A: - einen Adapter *erster Variante* in Gestalt als Tischplattenhalter, in perspektivischer Explosivansicht;
- Figur 11B: - den Adapter gemäss Figur 11A, zusammengesetzt, in gewechselter Perspektivansicht;
- Figur 11C: - einen Adapter *zweiter Variante* in Gestalt als Tischplattenhalter, in perspektivischer Explosivansicht;
- Figur 11D: - den Adapter gemäss Figur 11C, zusammengesetzt, in gewechselter Perspektivansicht;

Figuren 12A bis 12J: den Montageverlauf der Adapter *erster* und *zweiter Variante* gemäss Figuren 11A und 11C zur Halterung einer Tragfläche an einem Aufbau mit zwei am Verbinder *erster* und *zweiter Variante* gemäss Figur 6A und 6D angedockten ersten Wandelementen gemäss Figur 1A, in Prinzipdarstellungen;

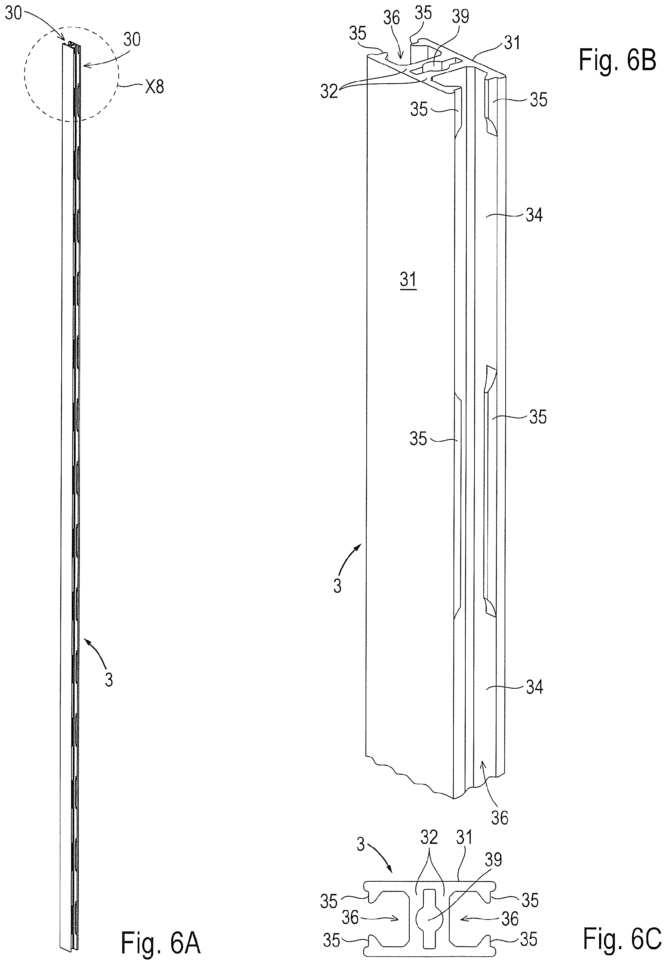

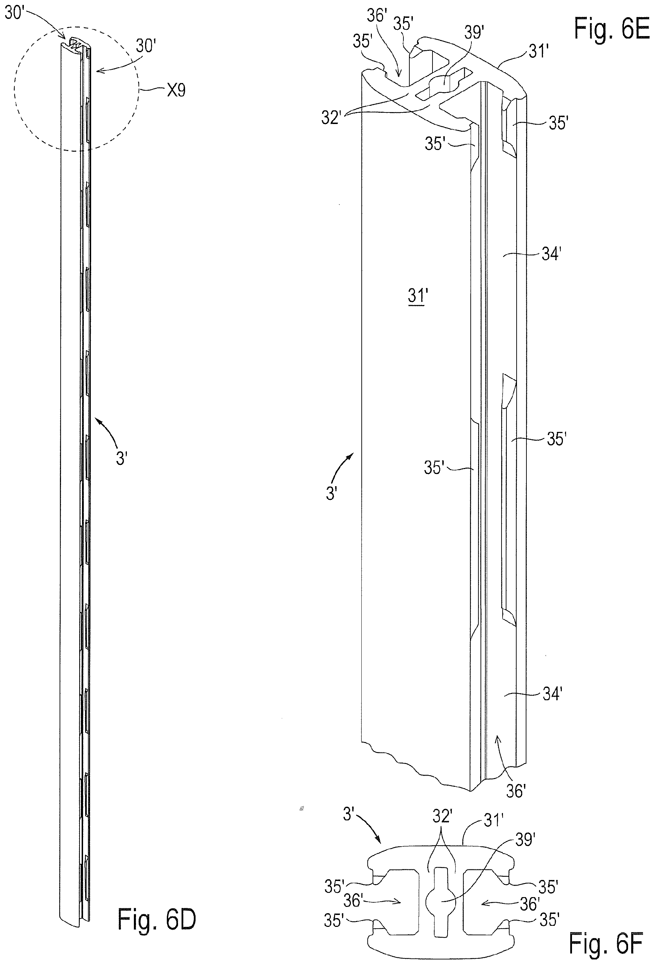

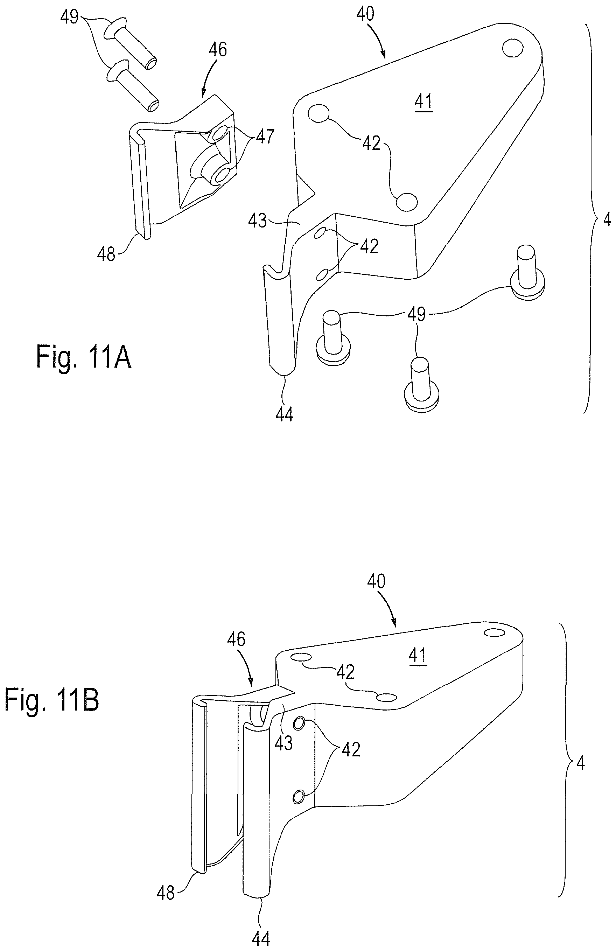

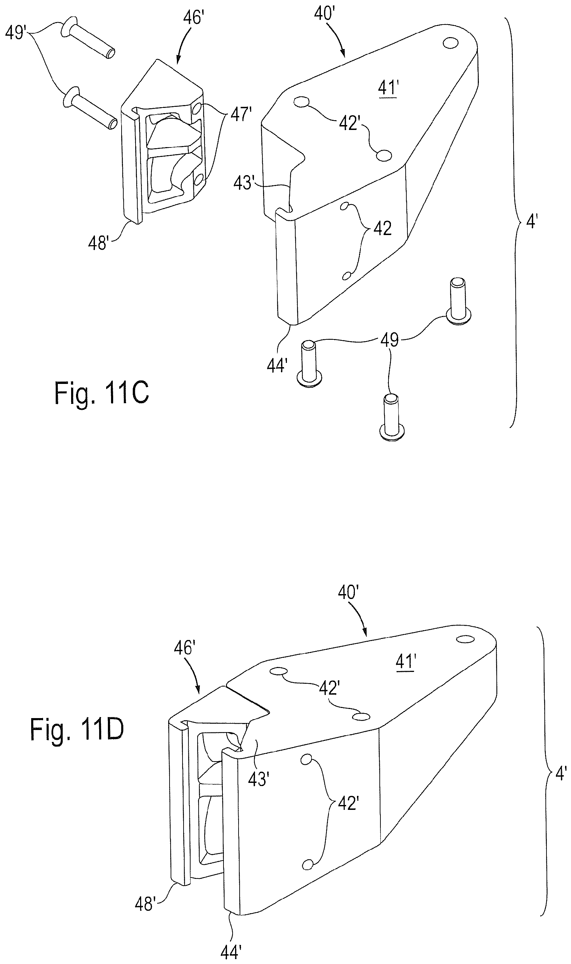

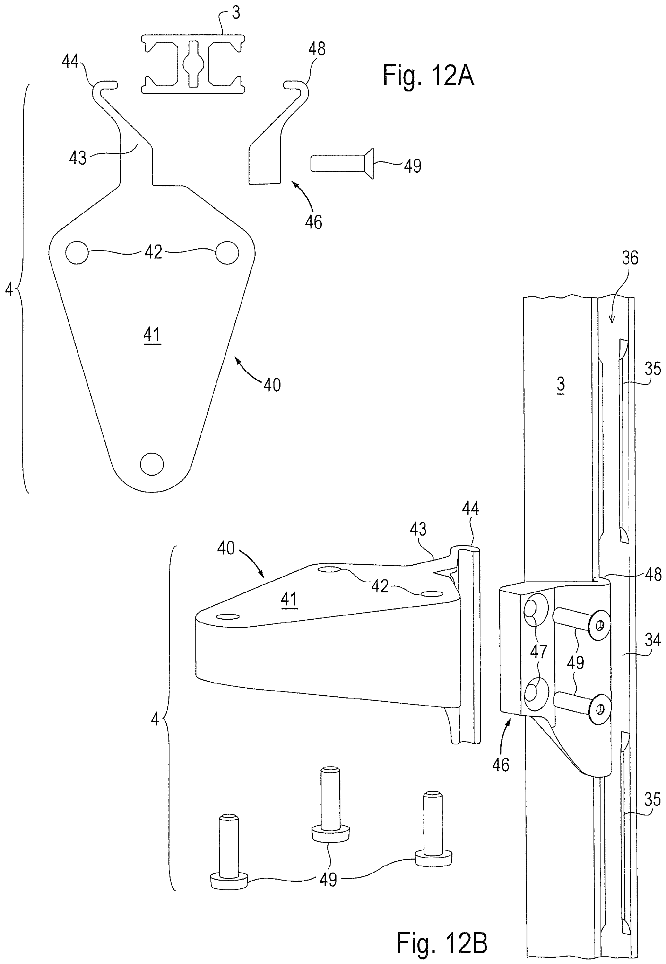

- Figur 12A: - das Basisteil und das Gegenstück des Adapters *erster Variante* gemäss Figur 11A, separat dem Verbinder *erster Variante* gemäss Figur 6A angenähert, in Draufsicht;
- Figur 12B: - den Aufbau gemäss Figur 12A, in Perspektivansicht;

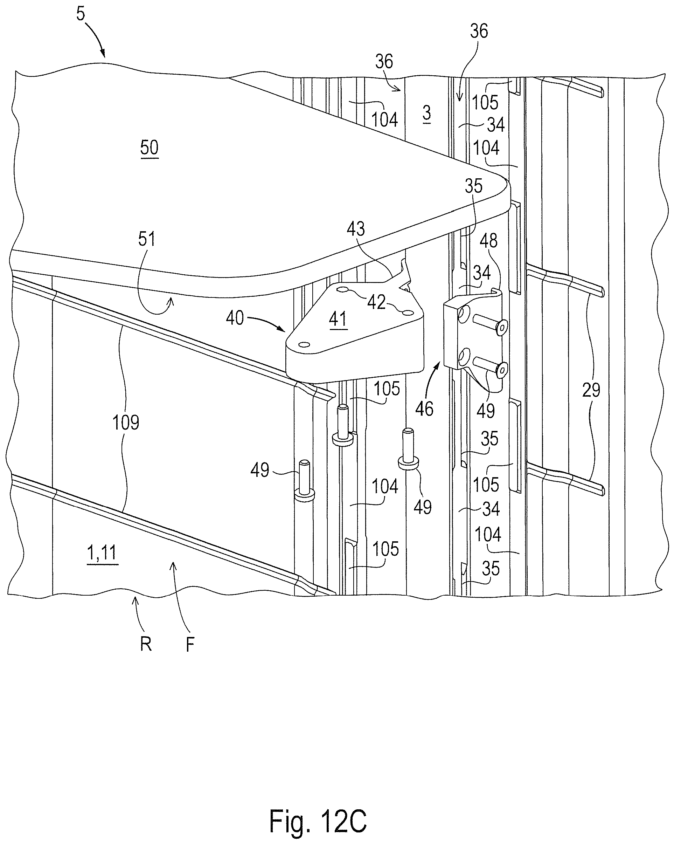

- Figur 12C: - den Aufbau mit am Verbinder *erster Variante* gemäss Figur 6A beidseits angedockten ersten Wandelementen, in den Verbinder eingehängtem Basisteil, angenähertem Gegenstück und Tragfläche, in Perspektivansicht;

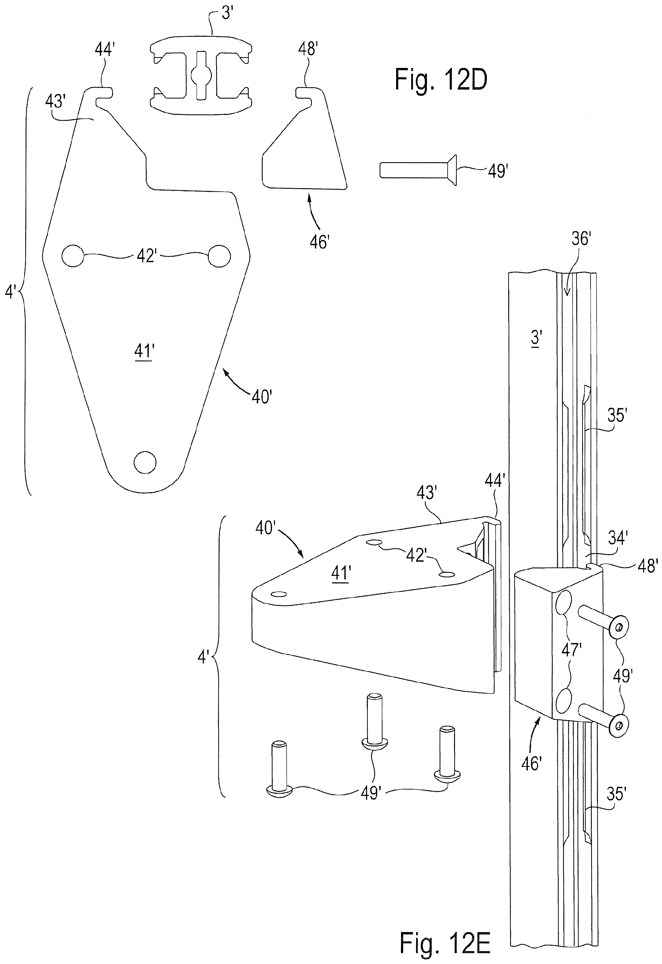

- Figur 12D: - das Basisteil und das Gegenstück des Adapters *zweiter Variante* gemäss Figur 11C, separat dem Verbinder *zweiter Variante* gemäss Figur 6D angenähert, in Draufsicht;
- Figur 12E: - den Aufbau gemäss Figur 12D, in Perspektivansicht;

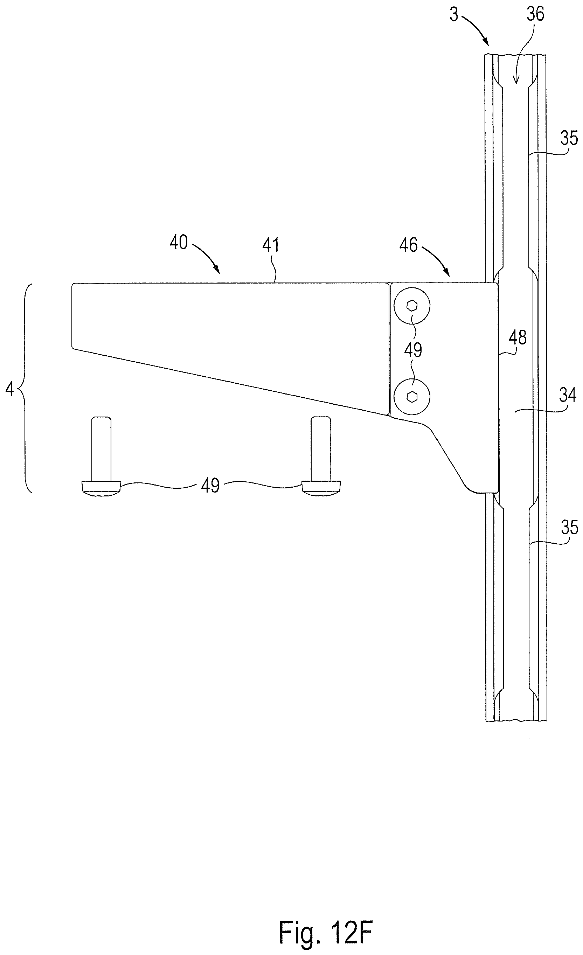

- Figur 12F: - den Aufbau gemäss Figur 12B, mit am Verbinder montierten Adapter, in Seitenansicht;

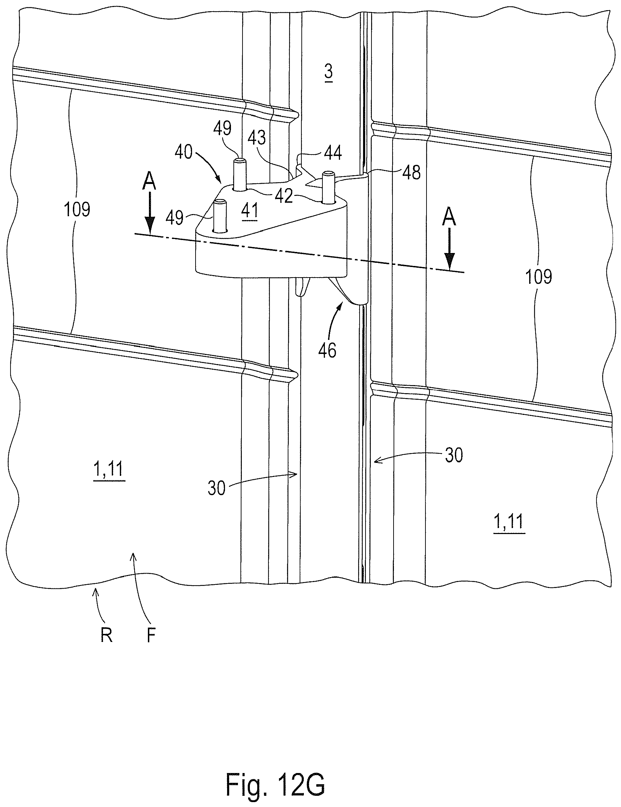

- Figur 12G: - den Aufbau gemäss Figur 12C mit am Verbinder montiertem Adapter, ohne Tragfläche, in Perspektivansicht;

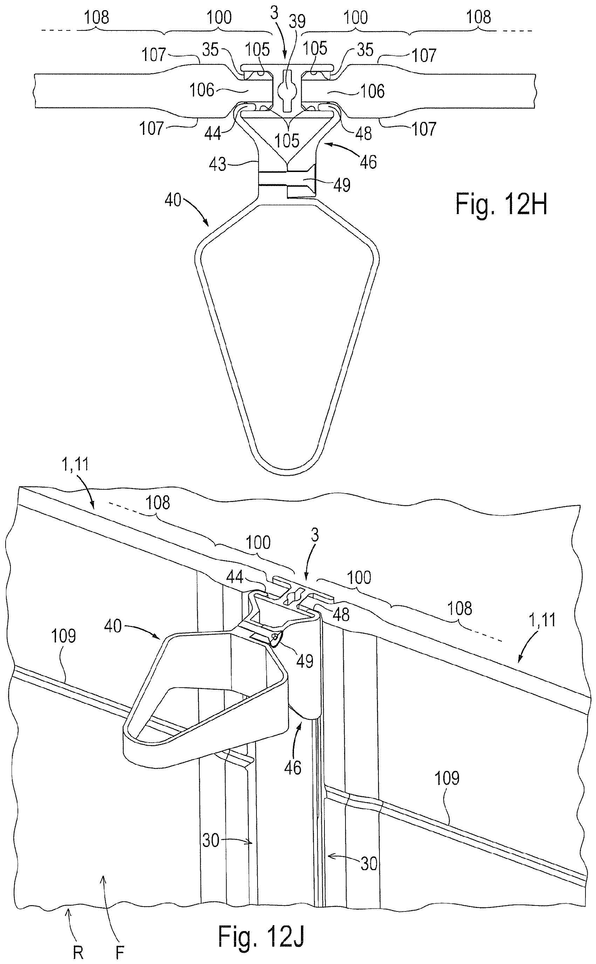

- Figur 12H: - den Aufbau gemäss Figur 12G, im Horizontalschnitt auf der Linie A-A, in Draufsicht;
- Figur 12J: - den Aufbau gemäss Figur 12G, im Horizontalschnitt auf der Linie A-A, in Perspektivansicht;

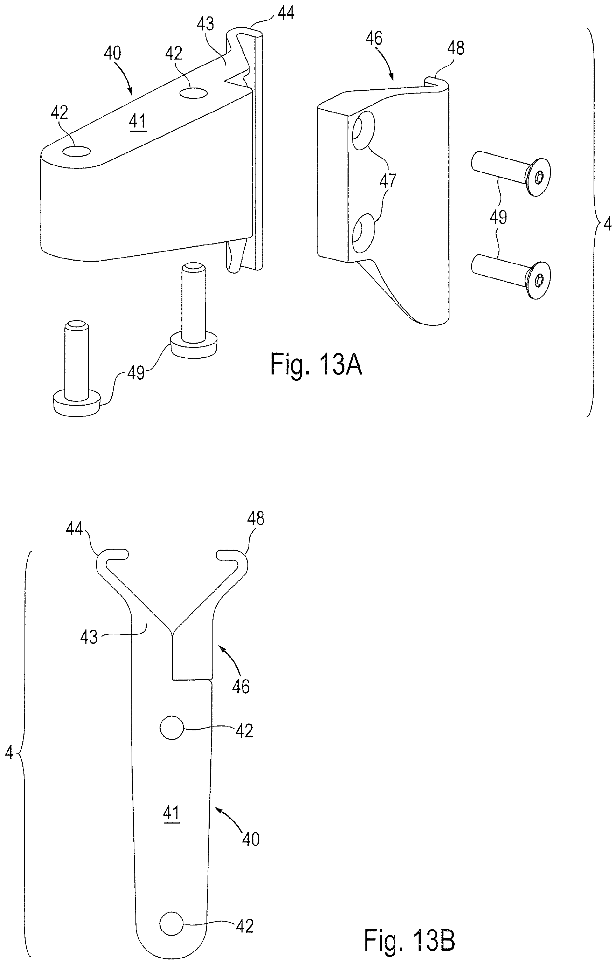

- Figur 13A: - einen Adapter *dritter Variante* in Gestalt als Tablarhalter, in perspektivischer Explosivansicht;
- Figur 13B: - den Adapter gemäss Figur 13A, zusammengesetzt, in Draufsicht;

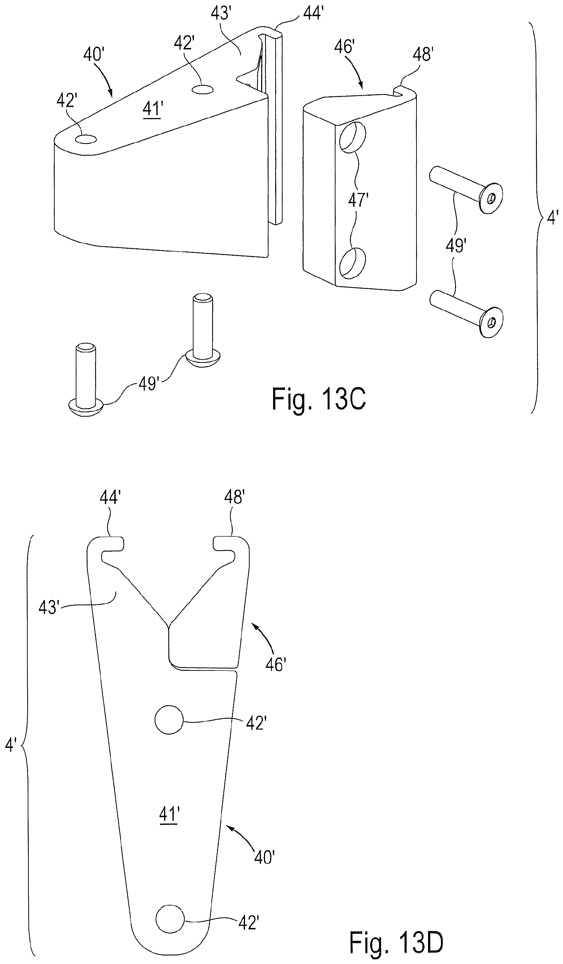

- Figur 13C: - einen Adapter *vierter Variante* in Gestalt als Tablarhalter, in perspektivischer Explosivansicht;
- Figur 13D: - den Adapter gemäss Figur 13C, zusammengesetzt, in Draufsicht;

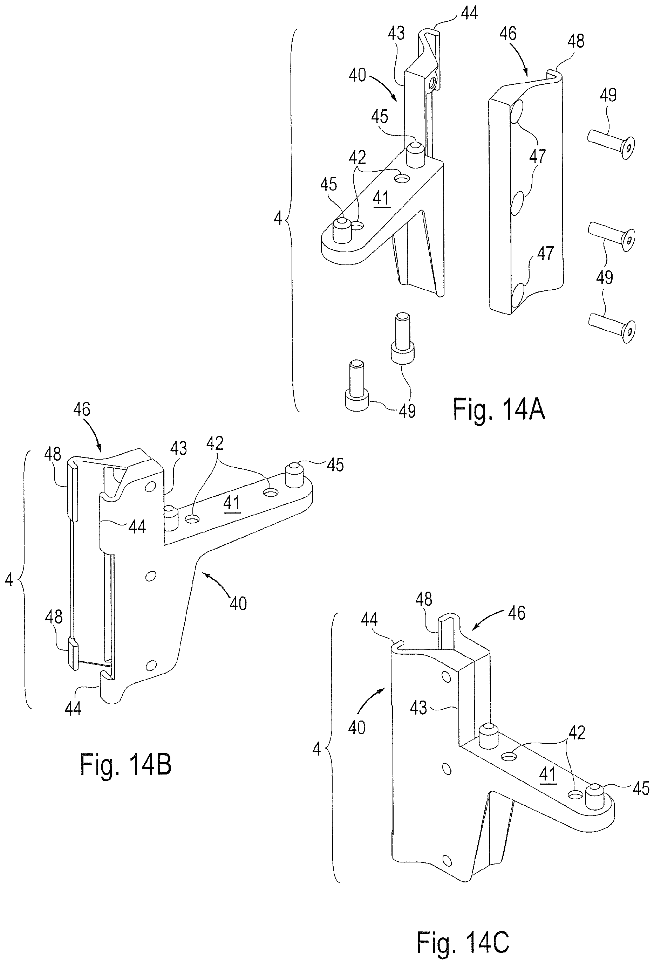

- Figur 14A: - einen Adapter *fünfter Variante* in Gestalt als Sitzhalter, in perspektivischer Explosivansicht;
- Figur 14B: - den Adapter gemäss Figur 14A, zusammengesetzt, in Perspektivansicht;
- Figur 14C: - den Adapter gemäss Figur 14B, in gewechselter Perspektivansicht;

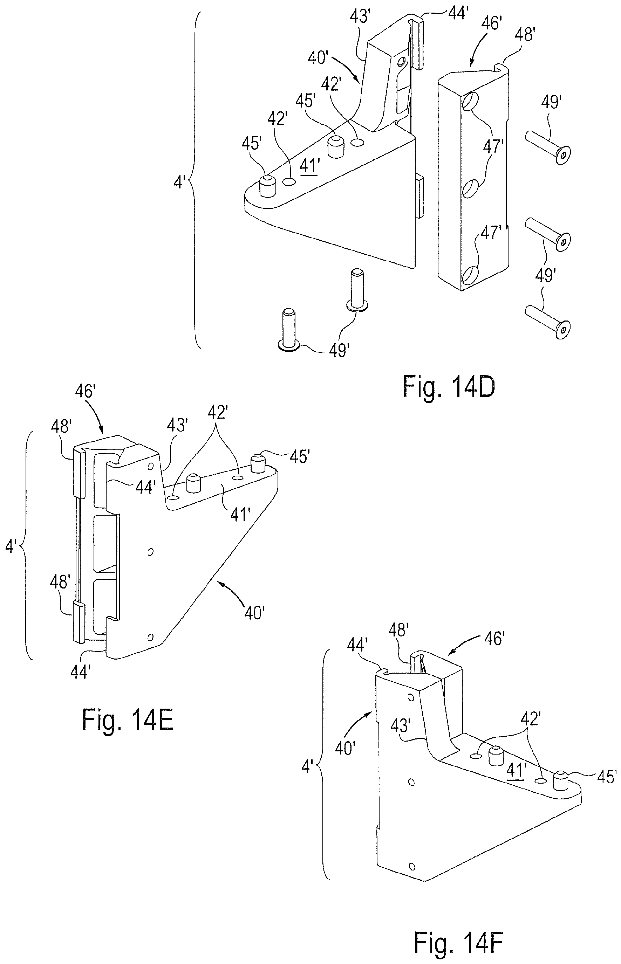

- Figur 14D: - einen Adapter *sechster Variante* in Gestalt als Sitzhalter, in perspektivischer Explosivansicht;
- Figur 14E: - den Adapter gemäss Figur 14D, zusammengesetzt, in Perspektivansicht;
- Figur 14F: - den Adapter gemäss Figur 14E, in gewechselter Perspektivansicht;

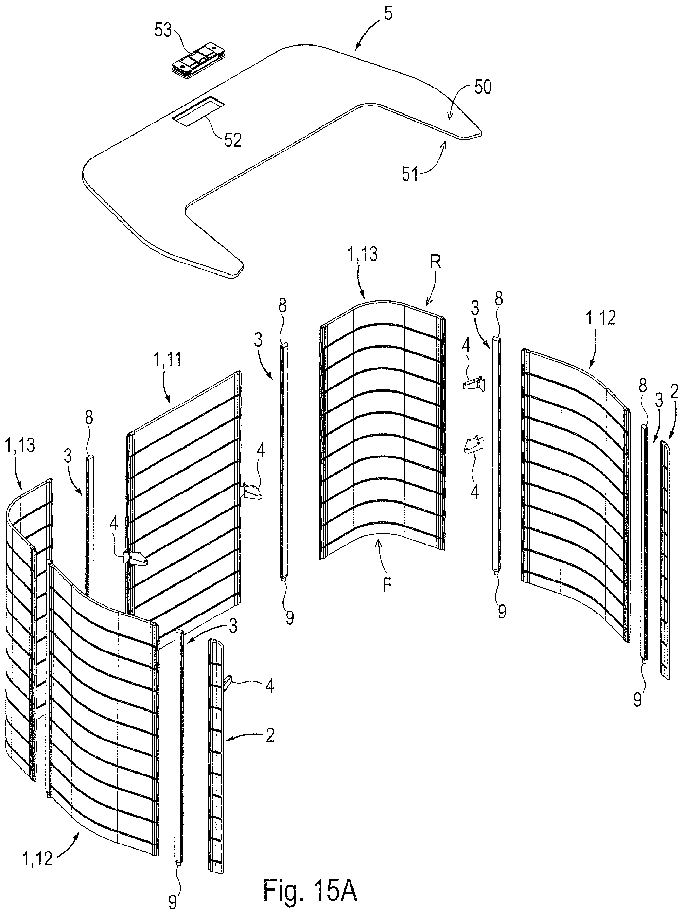

- Figur 15A: - die Bauteile zum Aufbau einer Kabine *erster Variante,* in perspektivischer Explosivansicht;

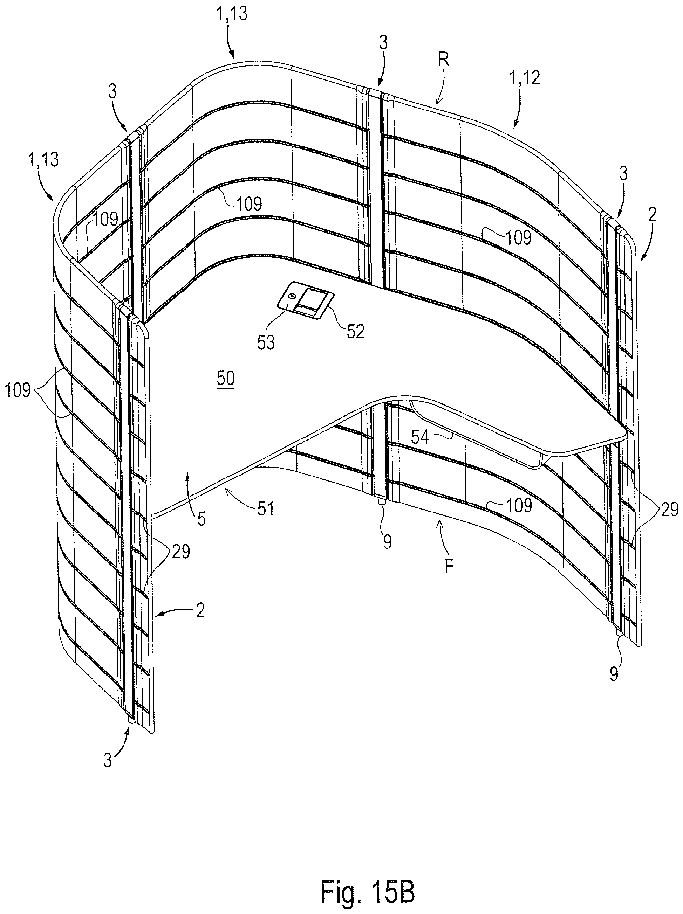

- Figur 15B: - eine errichtete Kabine *zweiter Variante,* für sitzende Nutzung, in Perspektivansicht;

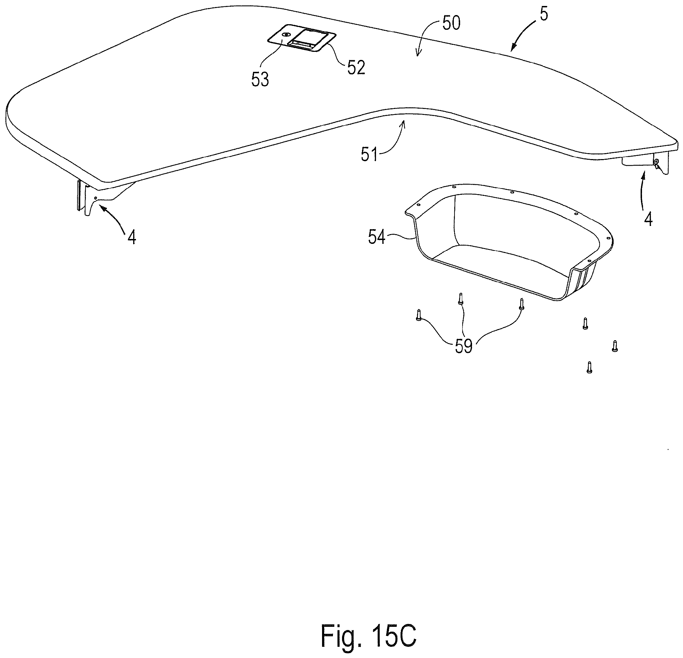

- Figur 15C: - die Tragfläche mit symbolisch darunter montierten Adaptern und angenähertem Behältnis aus Figur 15B, in Perspektivansicht;

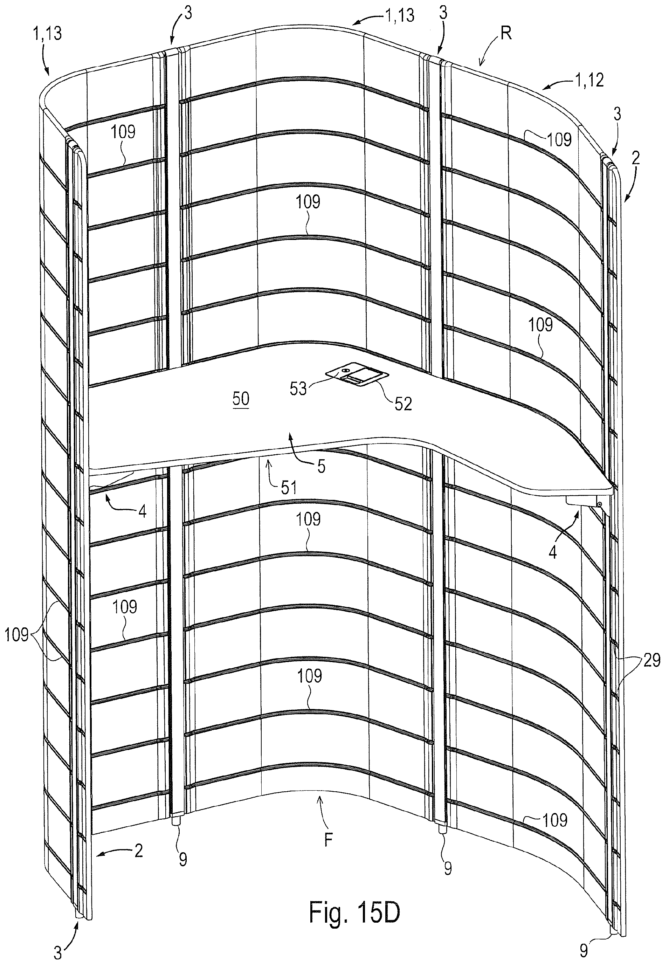

- Figur 15D: - die Kabine gemäss Figur 15B, modifiziert zu einer Kabine *dritter Variante,* für stehende Nutzung, in Perspektivansicht;

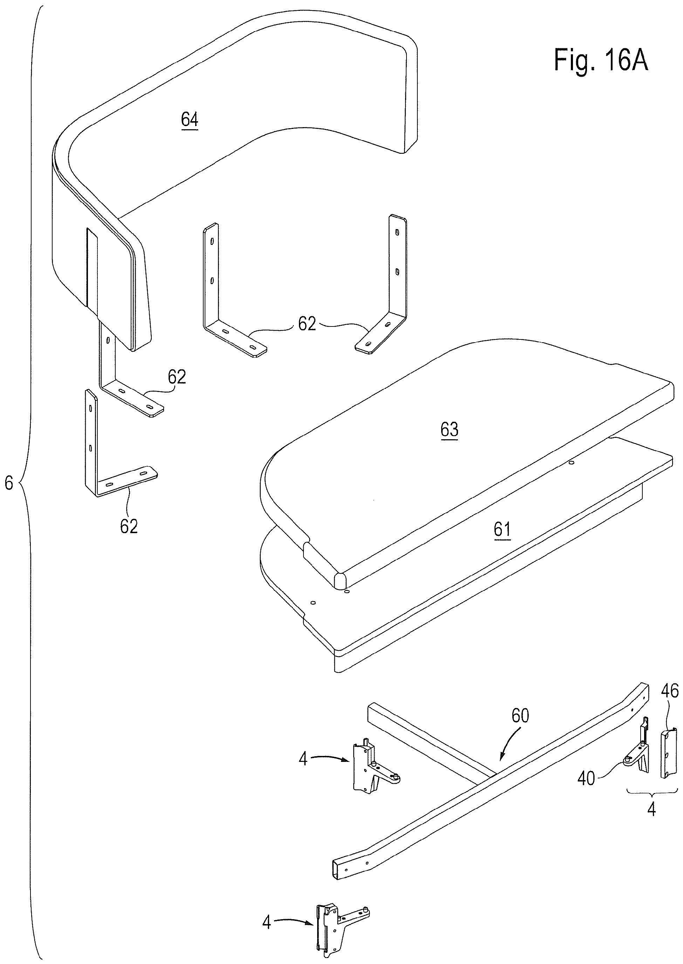

- Figur 16A: - einen Sitz mit zugehörigen Adaptern *fünfter Variante,* in perspektivischer Explosivansicht;

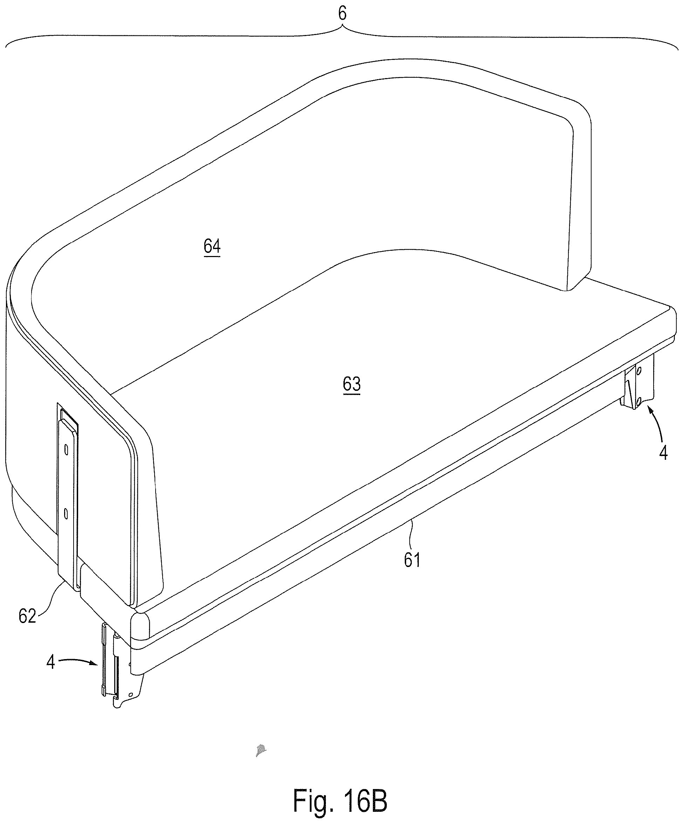

- Figur 16B: - den Aufbau gemäss Figur 16A, als montierter Sitz, mit symbolisch darunter montierten Adaptern, in Perspektivansicht;

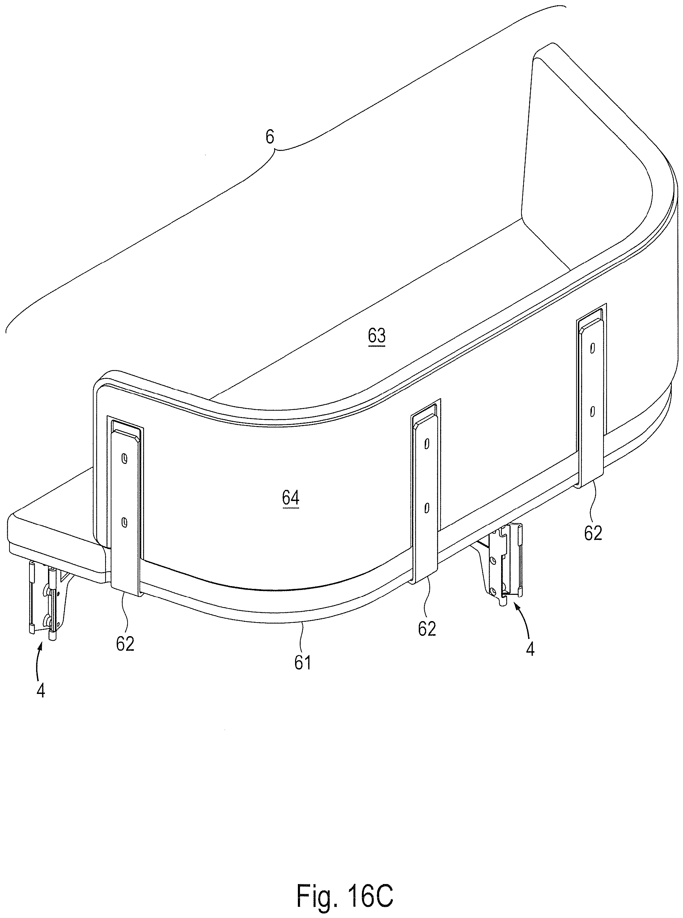

- Figur 16C: - den Aufbau gemäss Figur 16B, in gewechselter Perspektivansicht;

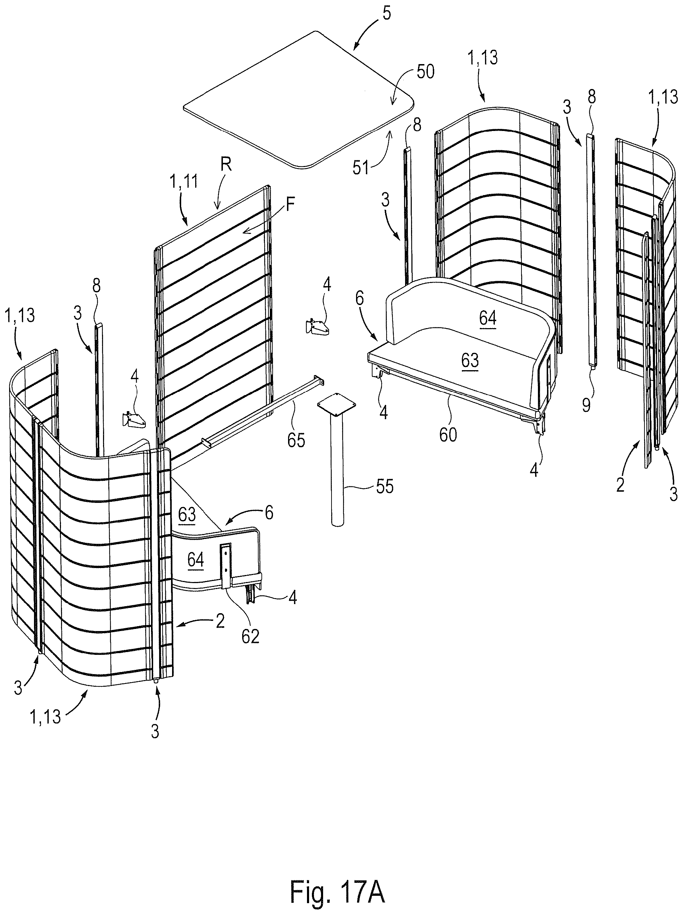

- Figur 17A: - die Bauteile zum Aufbau einer Kabine *vierter Variante,* in perspektivischer Explosivansicht;

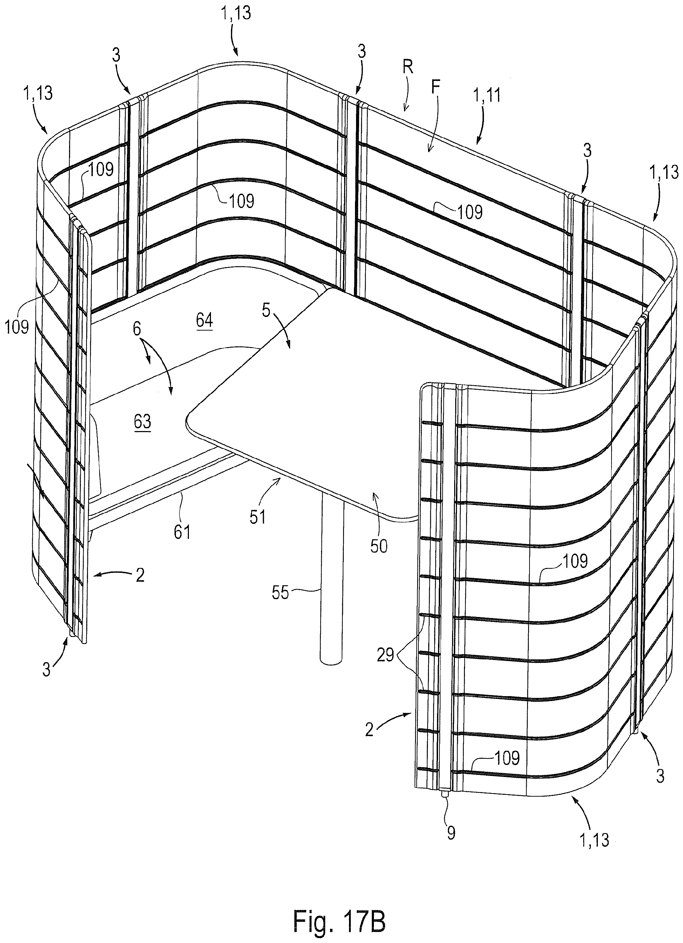

- Figur 17B: - die errichtete Kabine *vierter Variante,* aus den Bauteilen gemäss Figur 17A, in Perspektivansicht;

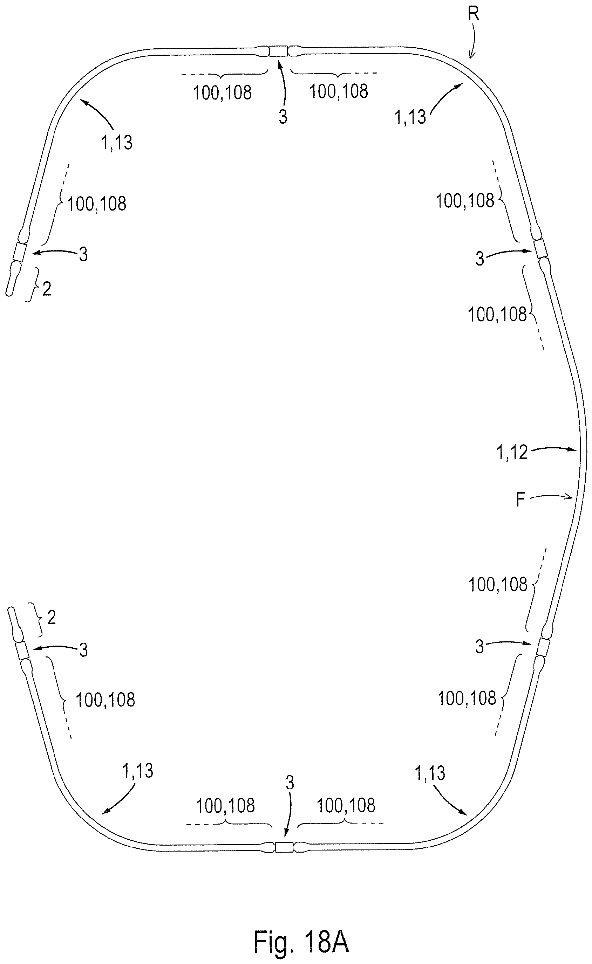

- Figur 18A: - eine errichtete Kabine *fünfter Variante,* in Draufsicht;

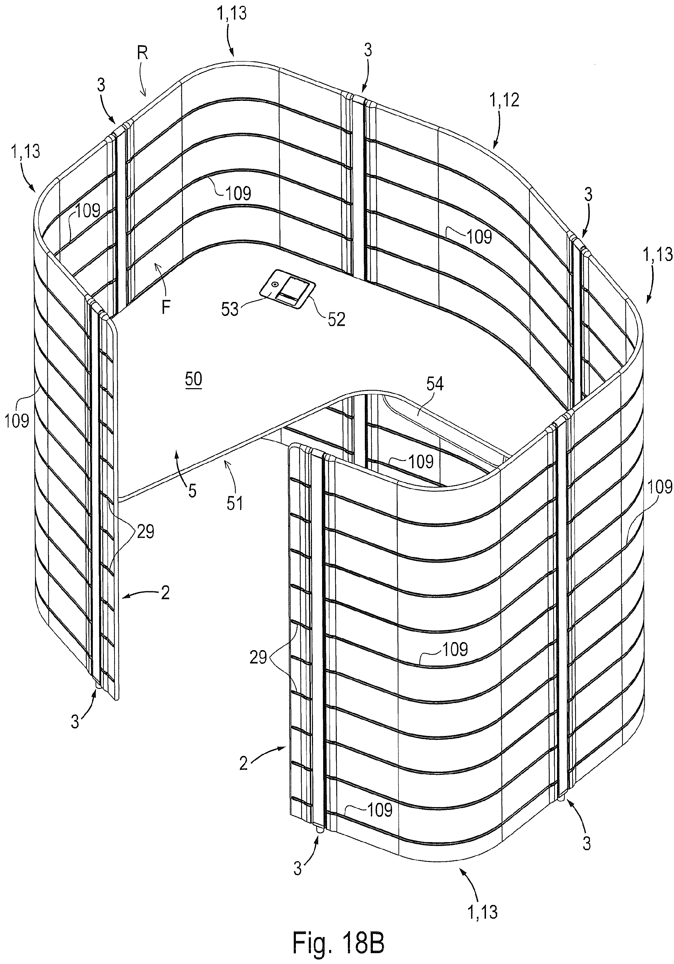

- Figur 18B: - die Kabine gemäss Figur 18A, mit eingebauter Tragfläche, in Perspektivansicht;

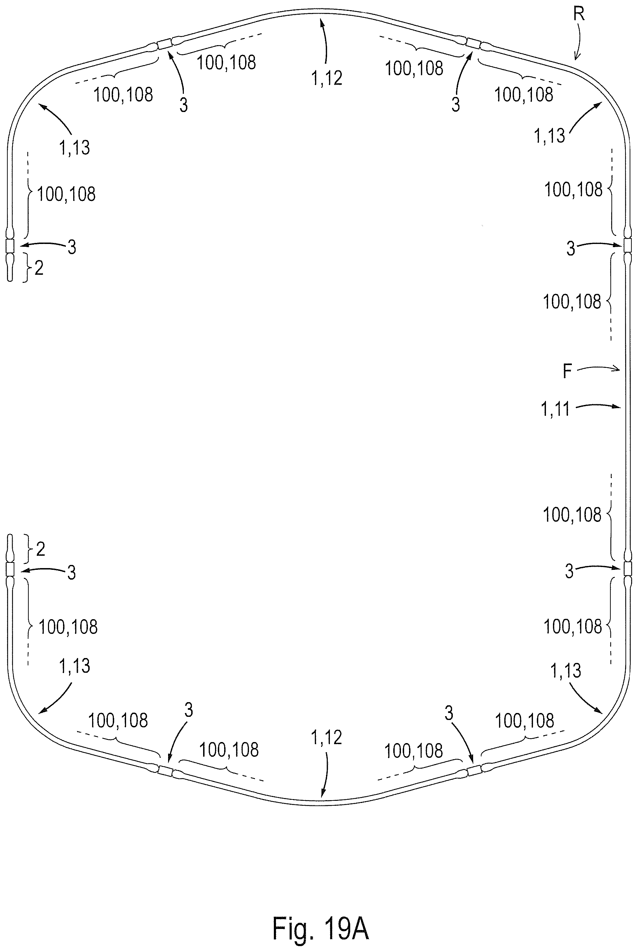

- Figur 19A: - eine errichtete Kabine *sechster Variante,* in Draufsicht;

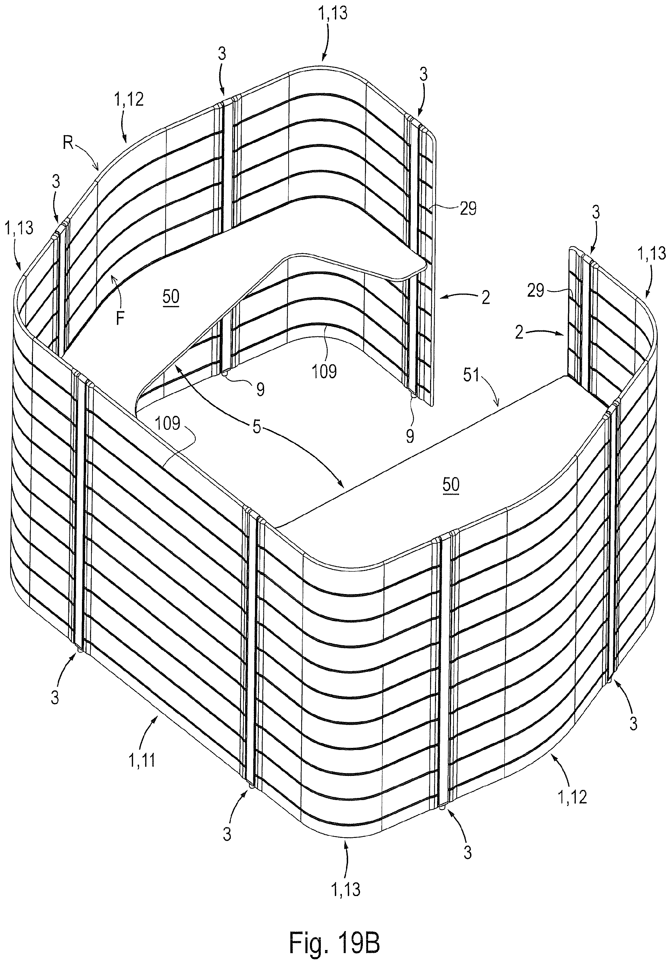

- Figur 19B: - die Kabine gemäss Figur 19A, mit eingebauter Tragfläche, in Perspektivansicht;

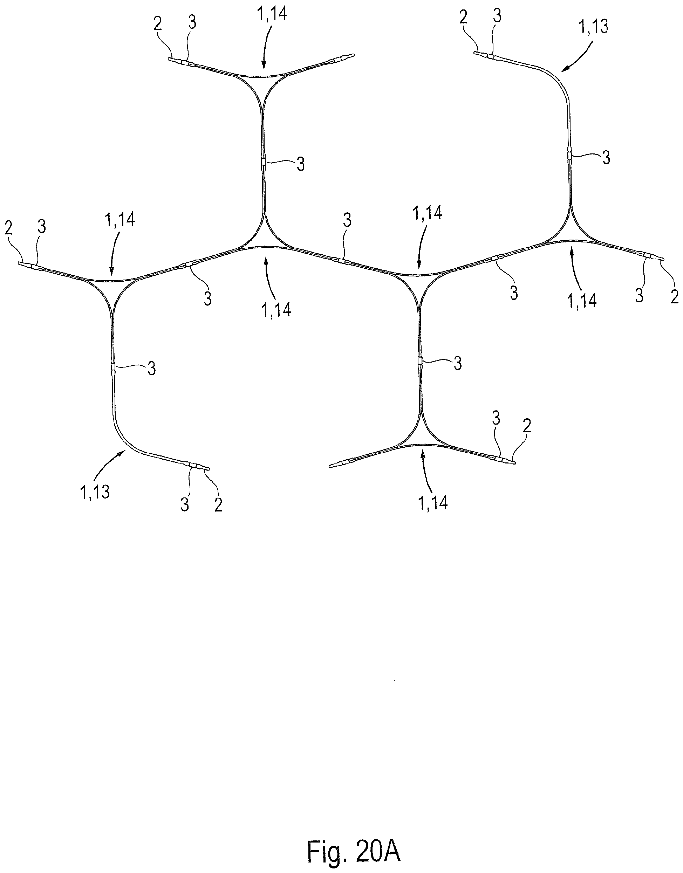

- Figur 20A: - einen komplexen Aufbau mehrerer benachbarter verschieden konfigurierter Kabinen, in Draufsicht;

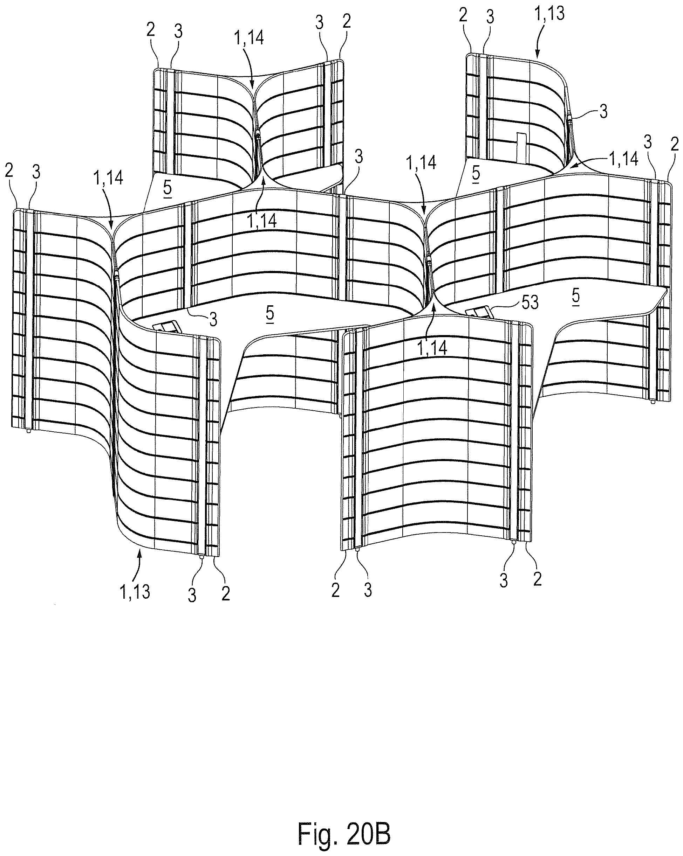

- Figur 20B: - den Aufbau gemäss Figur 20A mit eingebauten Tragflächen, in Perspektivansicht;

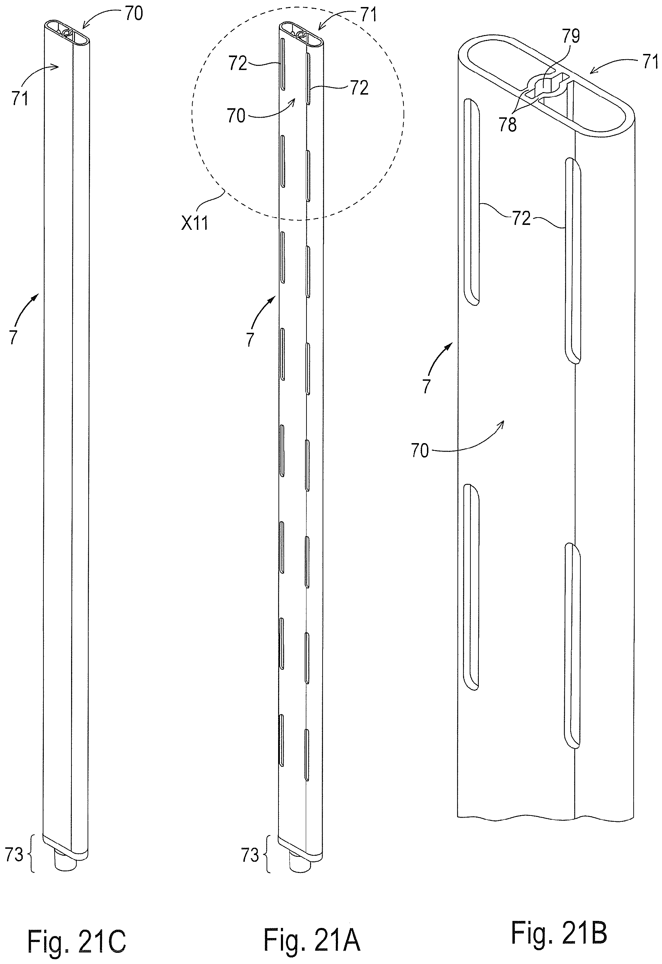

- Figur 21A: - eine Stütze *erster Variante,* mit einer Bodenbaugruppe *erster Variante,* in rückseitiger Perspektivansicht;
- Figur 21B: - das vergrösserte Detail X11 aus Figur 21A;
- Figur 21C: - den Aufbau gemäss Figur 21A, in frontseitiger Perspektivansicht;

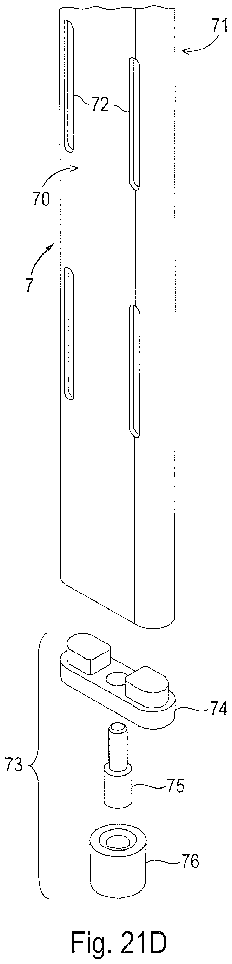

- Figur 21D: den Aufbau gemäss Figur 21A, mit dem unterem Ende der Stütze angenäherter Bodenbaugruppe, in perspektivischer Explosivansicht, als Ausschnitt;

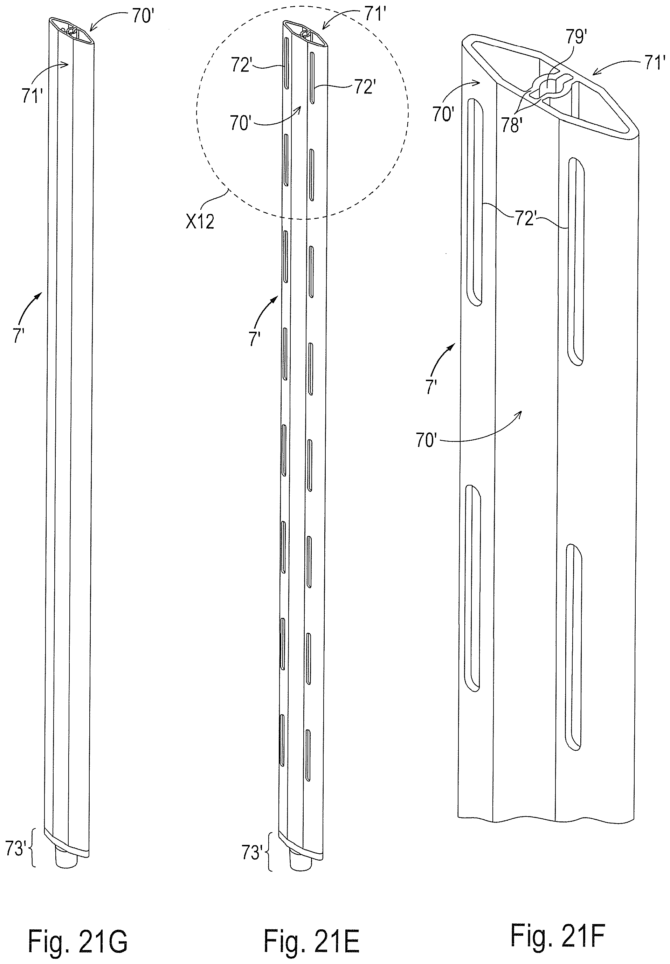

- Figur 21E: - eine Stütze *zweiter Variante,* mit einer Bodenbaugruppe *zweiter Variante,* in rückseitiger Perspektivansicht;
- Figur 21F: - das vergrösserte Detail X12 aus Figur 21D;
- Figur 21G: - den Aufbau gemäss Figur 21E, in frontseitiger Perspektivansicht;

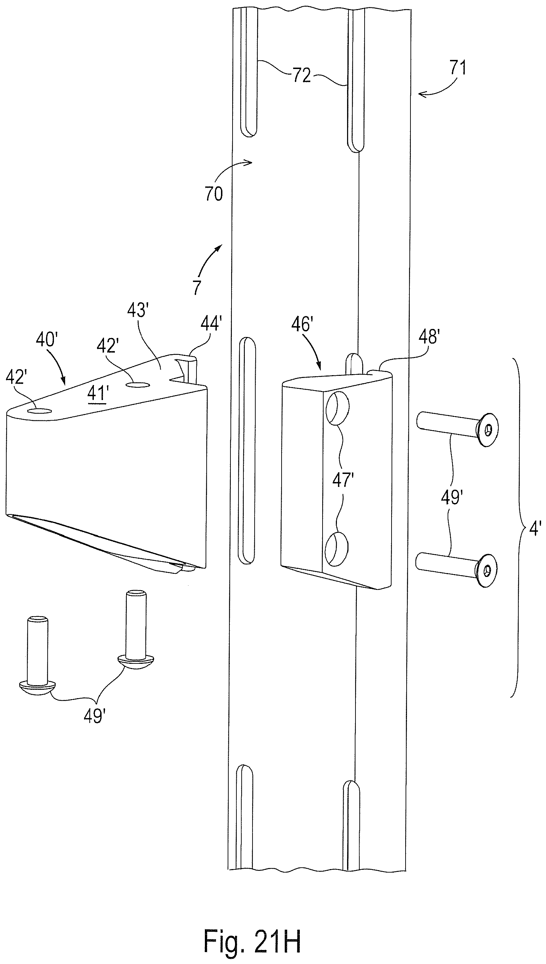

- Figur 21H: - die Stütze gemäss Figur 21A, mit angenäherten Bauteilen des Adapters *vierter Variante,* in perspektivischer Explosivansicht, als Ausschnitt;

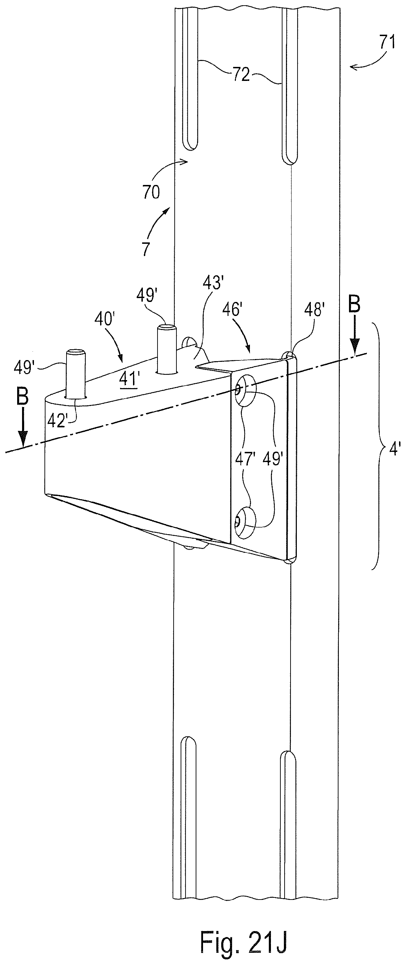

- Figur 21J: - den Aufbau gemäss Figur 21H mit dem Eingriff des an der Stütze montierten Adapters, in Perspektivansicht;

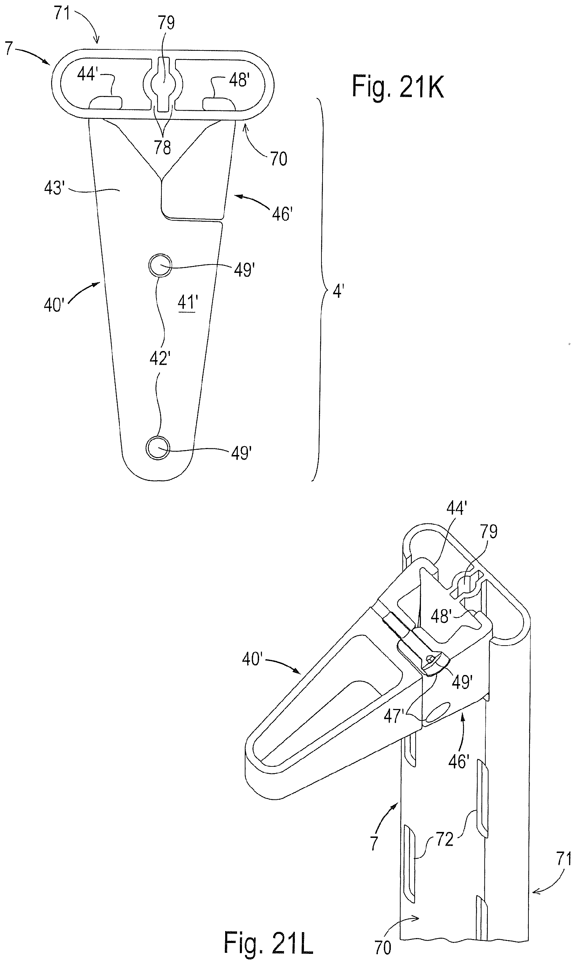

- Figur 21K: - den Aufbau gemäss Figur 21J, in Draufsicht;
- Figur 21L: - den Aufbau gemäss Figur 21J, im Horizontalschnitt auf der Linie B-B, in Perspektivansicht;

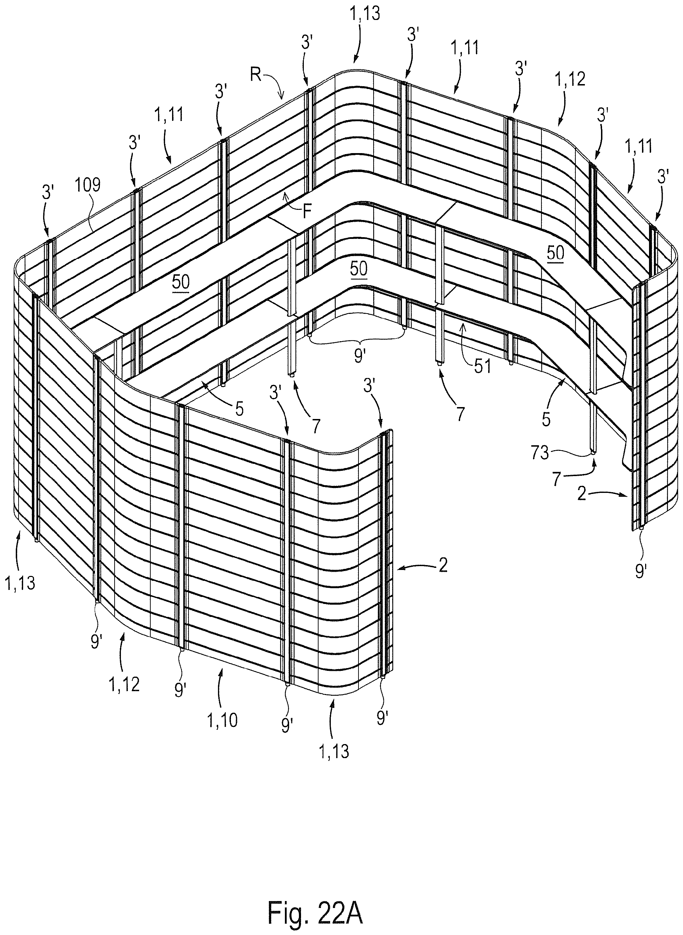

- Figur 22A: - eine errichtete Kabine *siebter Variante,* in Perspektivansicht;

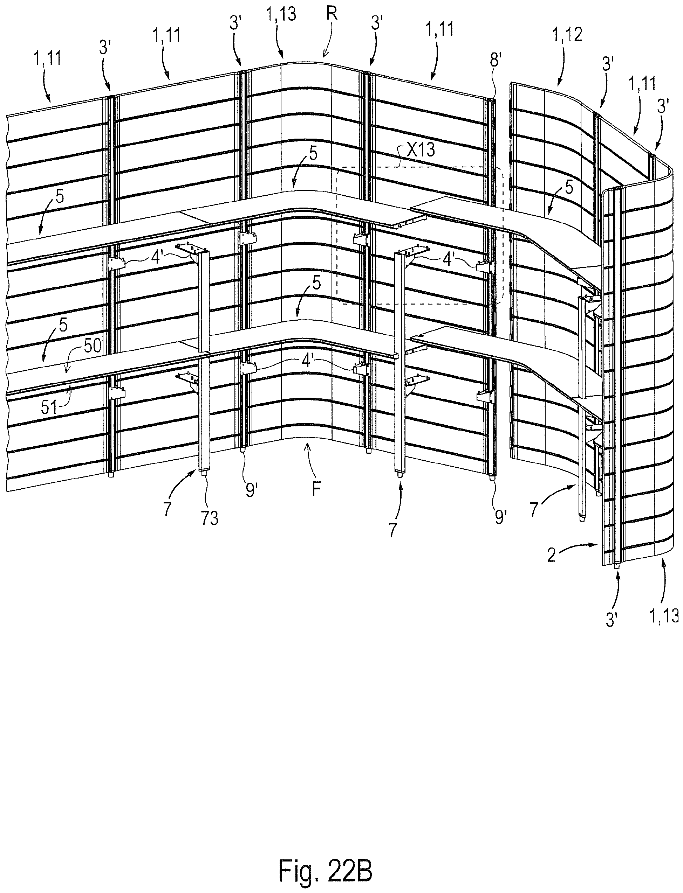

- Figur 22B: - einen Ausschnitt aus der Kabine gemäss Figur 22A, in perspektivischer partieller Explosivansicht;

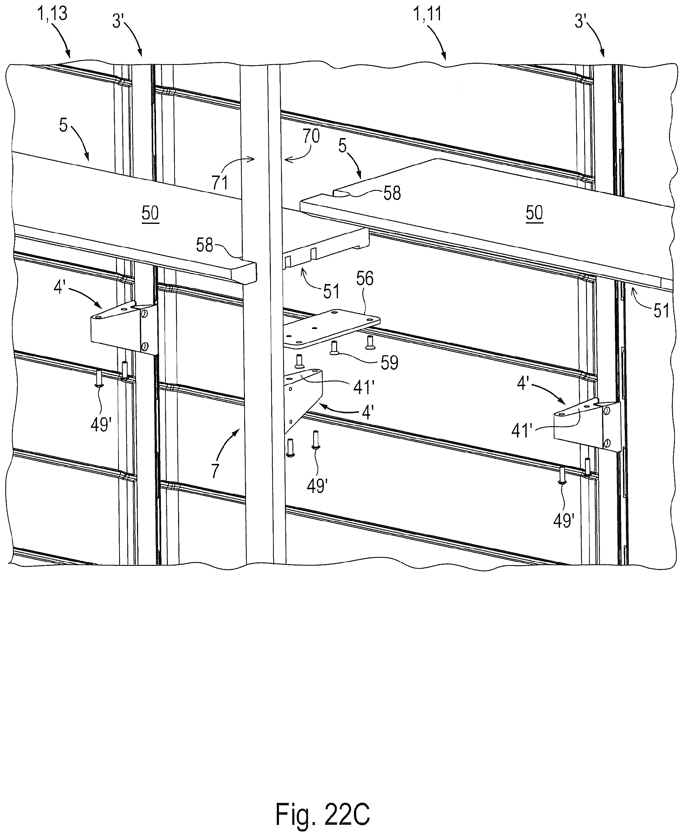

- Figur 22C: - das vergrösserte Detail X13 aus Figur 22B;

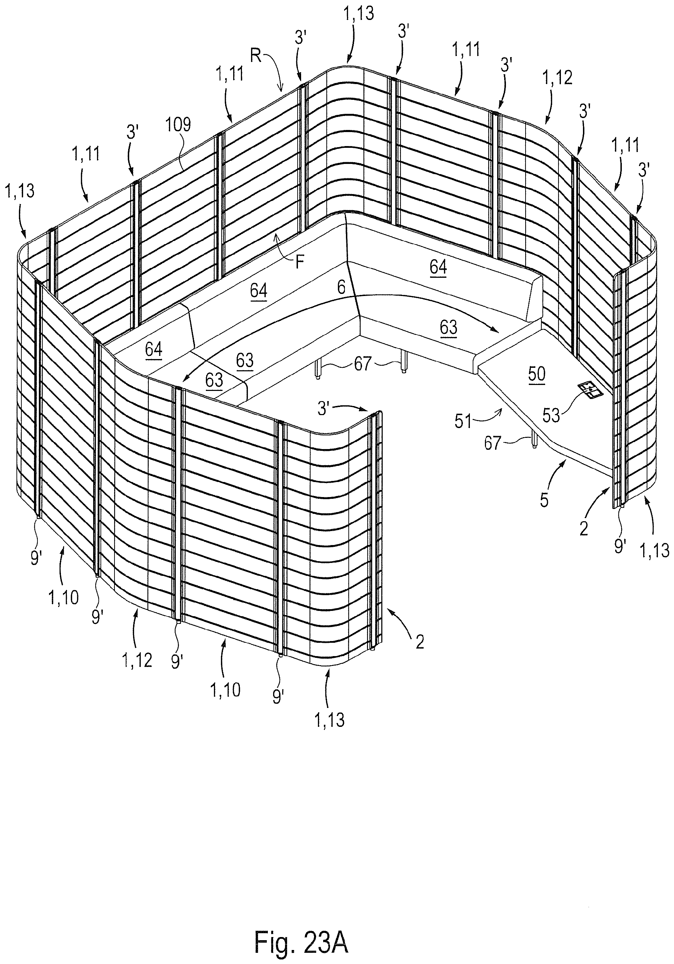

- Figur 23A: - eine errichtete Kabine *achter Variante,* in Perspektivansicht;

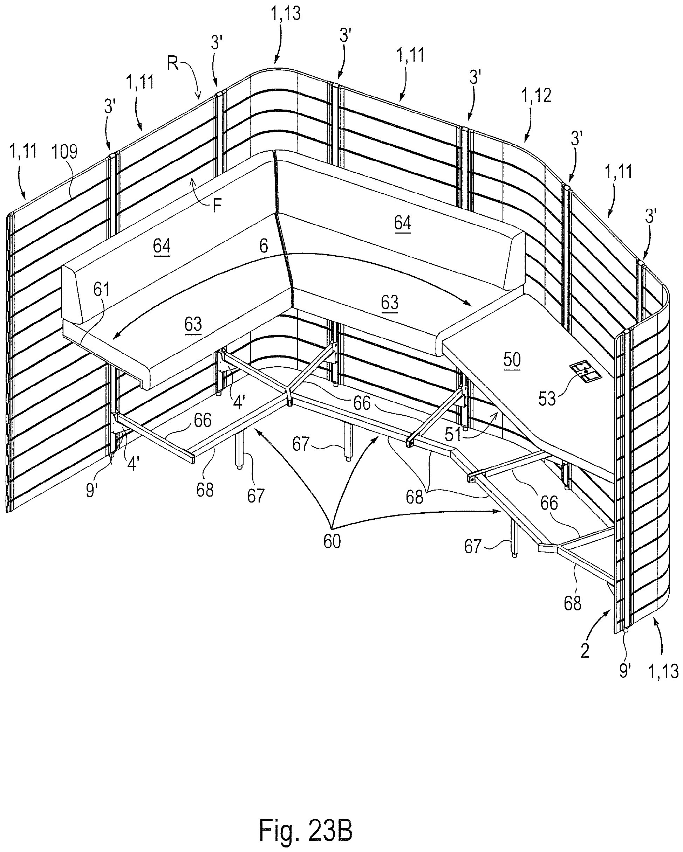

- Figur 23B: - einen Ausschnitt aus der Kabine gemäss Figur 23A, in perspektivischer partieller Explosivansicht;

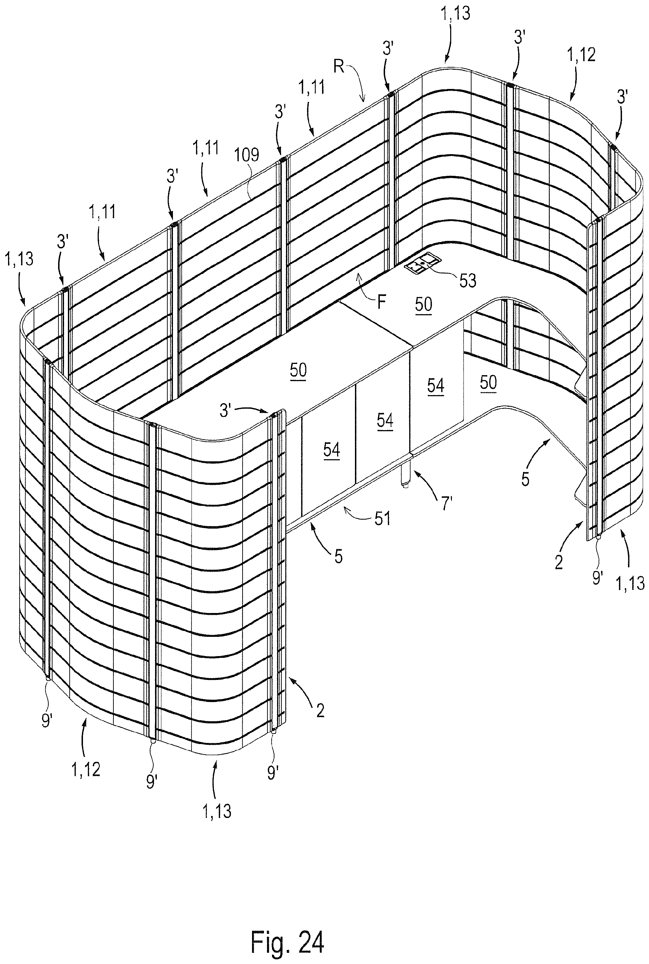

- Figur 24: - eine errichtete Kabine *neunter Variante,* als Küche nutzbar, in Perspektivansicht; und

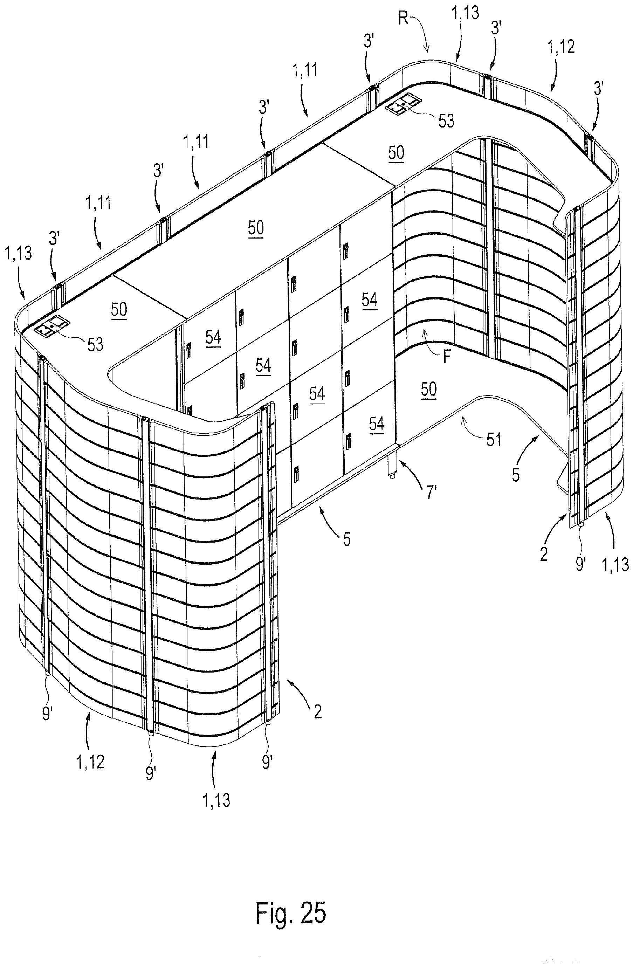

- Figur 25: - eine errichtete Kabine *zehnter Variante,* als Garderobe nutzbar, in Perspektivansicht.

### Ausführungsbeispiel

Anhand der beiliegenden Zeichnungen erfolgt nachstehend die detaillierte Beschreibung eines Ausführungsbeispiels zum erfindungsgemässen Bausatz mit den verschiedenen Typen von Wandelementen und den dazwischen anzuordnenden Verbindern für die Errichtung von vielfältig designten und ausgestatteten Raumteilern. Ebenfalls beschrieben werden die für die verschiedenen Ausstattungen eingesetzten Zusatzbauteile.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A bis 1D

Das Wandelement **1** in seiner Gestalt als erstes Element **11** hat eine rechteckförmige, im Prinzip ebene Fläche mit einer Frontseite **F** und einer dieser gegenüberliegenden Rückseite **R.** An jeder äusseren vertikal verlaufenden Längsseite ist eine Anschlussflanke **100** vorhanden. Zwischen den beiden Anschlussflanken **100** erstreckt sich die Wandung **108.** Beide Anschlussflanken **100** sind identisch beschaffen, so dass nachfolgend nur eine Anschlussflanke **100** beschrieben wird. Ausgehend von der Wandung **108** erweitert sich zunächst die Anschlussflanke **100** bis in etwa die Hälfte ihrer Länge auf der Frontseite **F** und der Rückseite **R** mit einer Wulst **107.** Angrenzend an die Wulst **107** verjüngt sich dann die Anschlussflanke **100** wiederum auf der Frontseite **F** und der Rückseite **R** hin zu einer Lippe **106,** welche mit einem freien Ende abschliesst und die Aussenkante entlang der Längsseite des ersten Elements **11** bildet.

Von der Lippe **106** erheben sich über die gesamte Längsseite hinweg auf der Frontseite **F** und der Rückseite **R** systematisch im Raster zueinander beabstandete rechteckförmige, längliche Konturen **105.** Zwischen den Konturen **105** verbleiben auf der Frontseite **F** und der Rückseite **R** jeweilige Zwischenräume **104,** wobei die einzelnen Konturen **105** zueinander das Rastmass von z.B. 130mm besitzen. Die Oberkante **103** verläuft in horizontaler Richtung entlang der Wandung **108** sowie über die Anschlussflanken **100** und ist eine verfestigte Pinch-Kante, welche werkzeugtechnisch hergestellt wird und keiner zusätzlichen Nachbearbeitung bedarf. An der Aussenkante ist im Bereich der Lippe **106** an der Oberkante **103** ein stufiger Freischnitt **102** vorhanden. Mehrere zueinander parallel beabstandete Versteifungsmittel **109** verlaufen in horizontaler Richtung im Bereich der Wandung **108** bis in die Anschlussflanken **100** hinein und enden quasi an den Lippen **106.** Im vorliegenden Beispiel sind die Versteifungsmittel **109** stärker verdichtete Zonen, die als Nuten erscheinen.

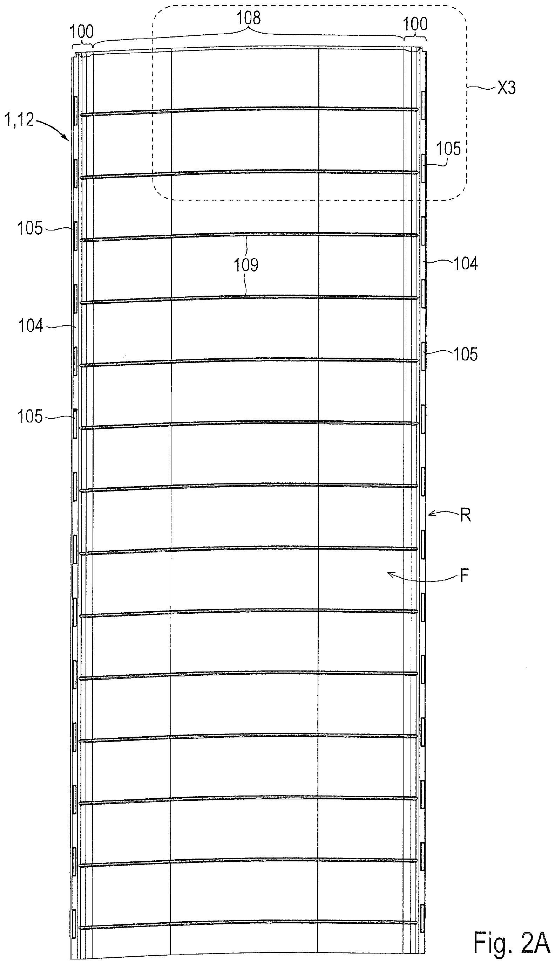

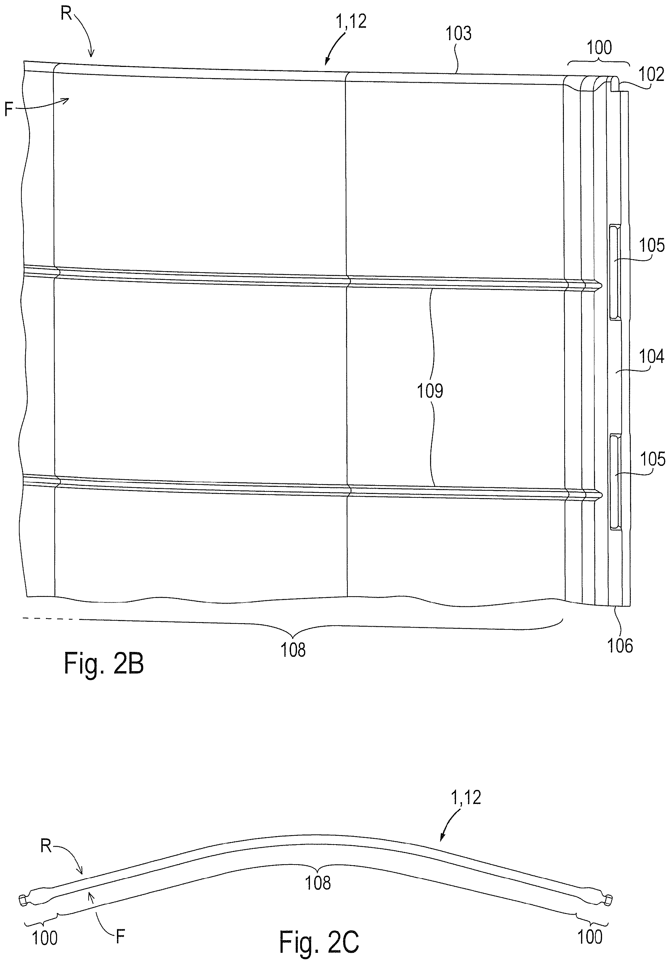

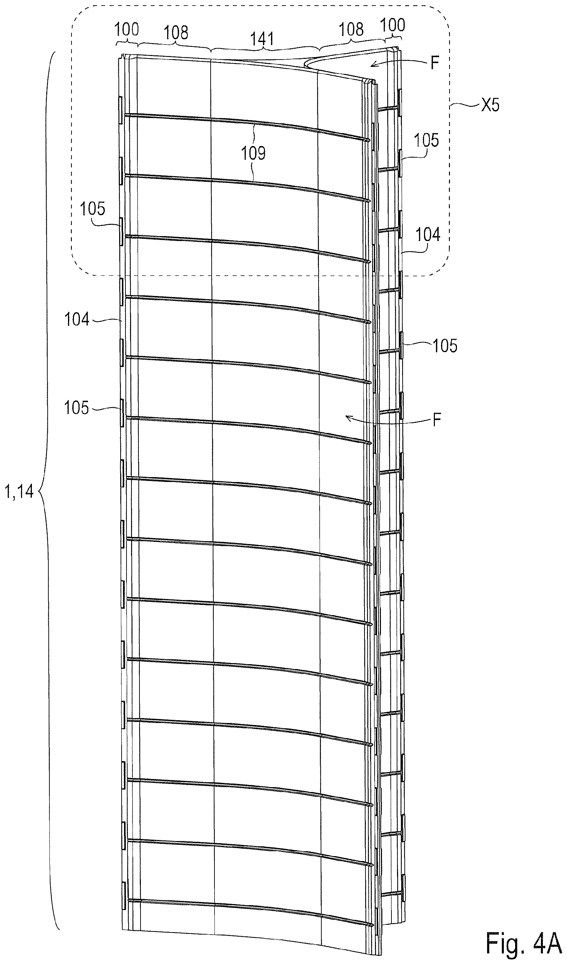

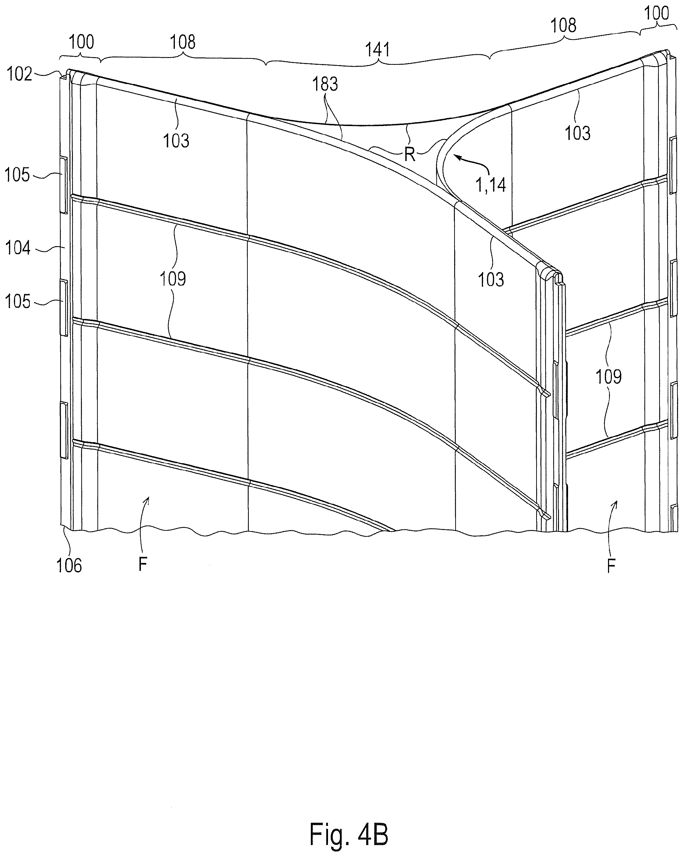

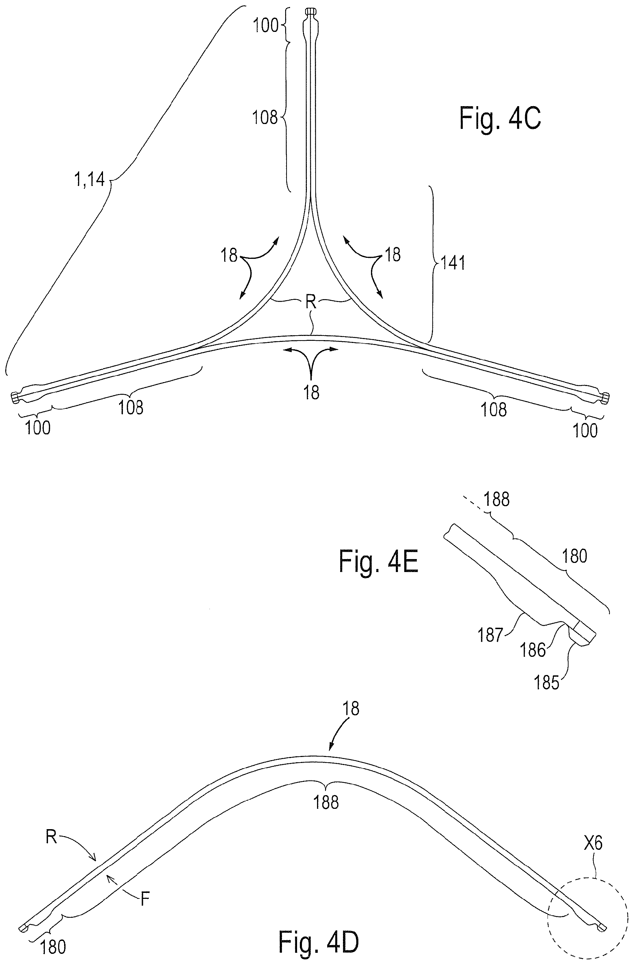

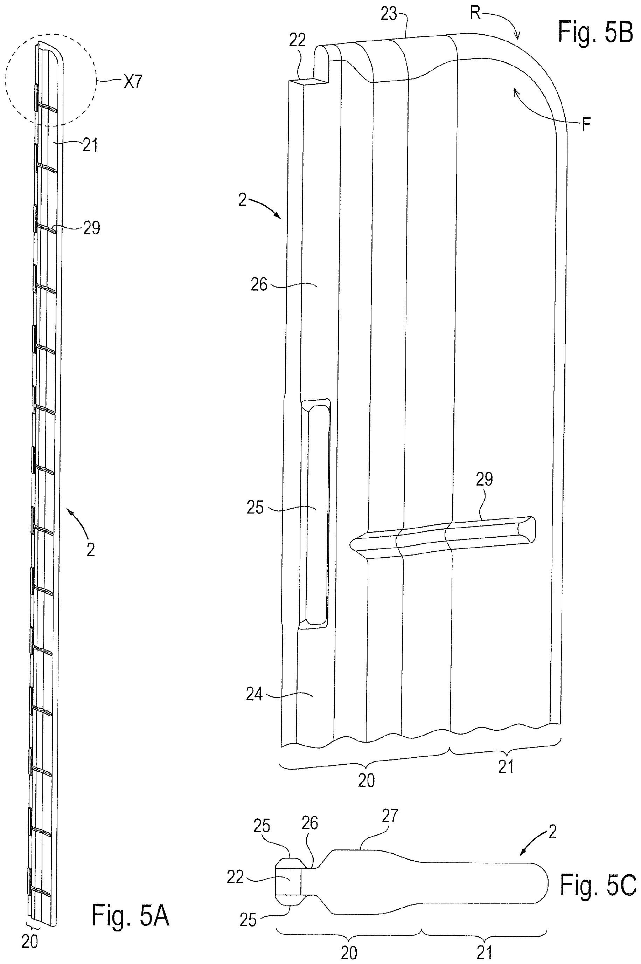

Das erste Wandelement **11** und die später beschriebenen Wandelemente **1** wie das zweite Element **12,** das dritte Element **13** (s. Figuren 2A bis 3C) sowie das Seitenelement **2** (s. Figuren 5A bis 5C) sind quasi identisch aufgebaut und unterscheiden sich nur in ihrer Form bzw. Dimension. Der Produktionsvorgang der Wandelemente **1** und des Seitenelements **2** wird daher nur einmal beschrieben. Lediglich das vierte Element **14** (s. Figuren 4A bis 4D) unterscheidet sich in der Herstellung etwas und wird daher später separat erläutert.

Als Ausgangsmaterial verwendet man ein vernadeltes Polyestervlies von z.B. 15mm Dicke bei einer Dichte von z.B. 1,5kg/m² mit den entsprechenden länglichen sowie seitlichen Abmassen, welche etwas grösser beschaffen sind, als die Abmasse des fertigen Erzeugnisses, wie z.B. das erste Wandelement **11** von z.B. 1900mm Länge und 780mm Breite. Das Polyestervlies besteht aus 70% hochschmelzenden Polyfasern und 30% Bicofasern bzw. Klebefasern. Für den Pressvorgang wird jeweils eine Polyestervliesseite in die entsprechende Werkzeughälfte gelegt, wobei die andere Polyestervliesseite in der anderen Werkzeughälfte liegt. Zwischen den beiden noch voneinander beabstandeten Polyestervliesseiten ist eine Klebefolie eingefügt. Beim Pressvorgang fahren die beiden Werkzeughälften unter erhöhter Temperatur (ca. 190°C) komplementär zusammen, so dass die beiden Polyestervliesseiten mittels Druck auf z.B. 12mm Dicke im Bereich der Wandung **108** verdichtet und aufgrund der Klebefolie gleichsam miteinander verbunden werden. Während des Pressvorgangs wird mittels der beiden Werkzeughälften und anhand der Pinch-Technik die Oberkante **103** - hier z.B. als Halbkreis beschaffen - fertig ausgebildet. Dabei wird das Polyestervlies entlang der Oberkante **103** zusätzlich verdichtet, wodurch die Stabilität erhöht und die Nutzerfreundlichkeit verbessert wird. Da die Oberkante **103** bei den später gezeigten Aufbauten als einzige Kante sichtbar ist, unterstreicht der formschöne Abschluss den optischen Effekt und vermittelt ausserdem einen insgesamt hochwertigen Eindruck.

Die übrigen am ersten Wandelement **11** vorhandenen Sektionen, wie die Konturen **105,** die Lippen **106,** die Wülste **107** und die Versteifungsmittel **109** werden von dazu komplementären Bereichen in der jeweiligen Werkzeughälfte während des Pressvorgangs geschaffen. Dabei sind die Versteifungsmittel **109** und die Lippen **106** am stärksten verpresst, da hier die Materialdicke des Polyestervlieses am geringsten ist, wohingegen die Wülste **107** am schwächsten verpresst sind, da hierbei die Materialdicke am stärksten ist. Nach dem Pressvorgang fahren die zwei Werkzeughälften wieder auseinander und der Materialüberstand des verpressten Polyestervlieses wird an seinen beiden Längskanten und an seiner Unterkante - diese liegt der Oberkante **103** gegenüber - z.B. mittels Wasserstrahlschneidens entfernt, so dass das erste Wandelement **11** die gewünschten Abmasse von z.B. 1900mm Länge und 780mm Breite erhält. Der Freischnitt **102** an der Oberkante **103** wird vorzugsweise durch ein Fräs- bzw. Schneidwerkzeug realisiert.

### Figuren 2A bis 2C

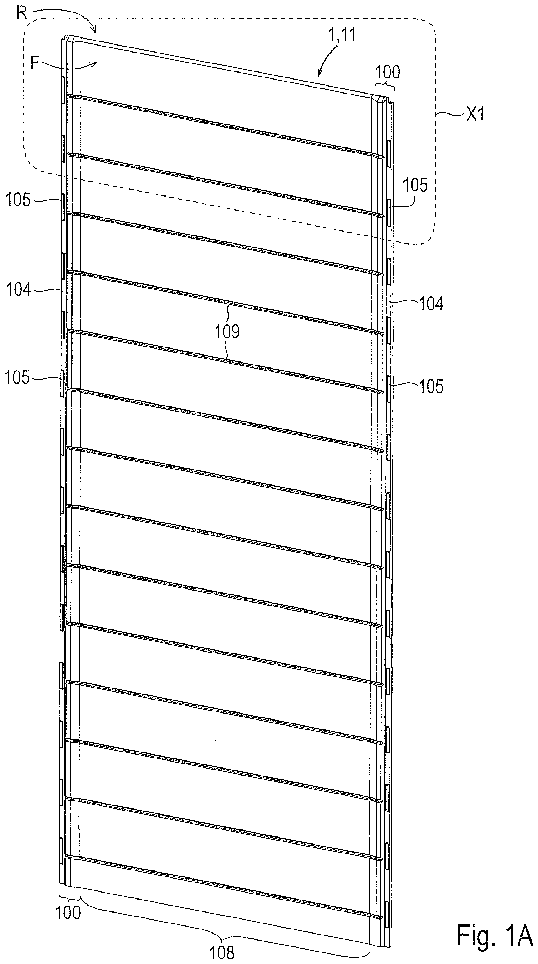

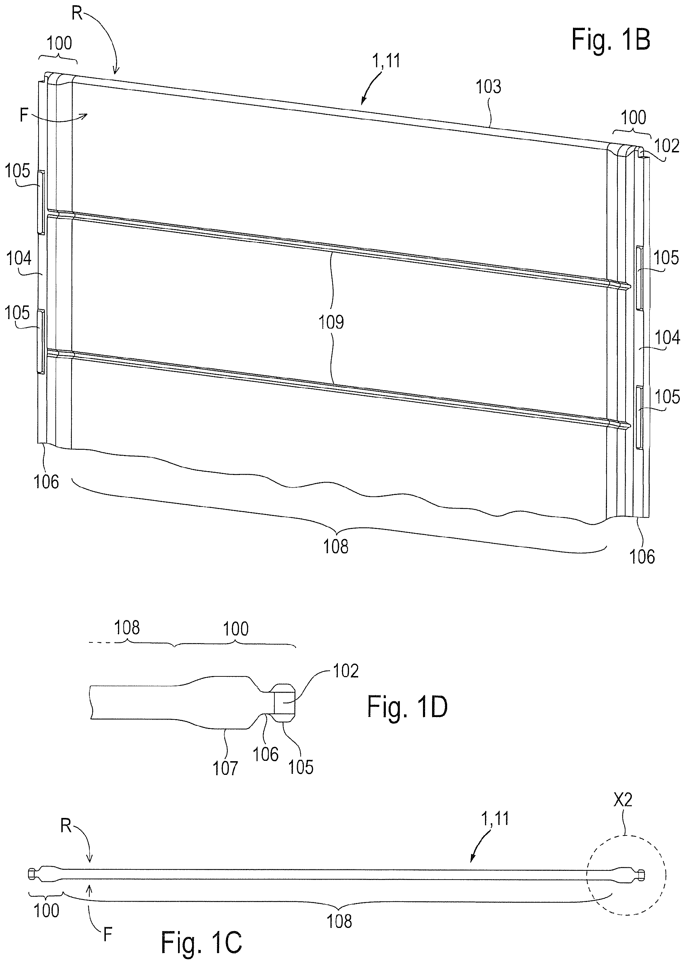

Das zweite Wandelement **12** hat wiederum eine rechteckförmige Fläche, die jedoch im Winkel von z.B. 150° gebogen ist. Die konkave Seite wird als Frontseite **F** definiert, die konvexe hingegen als Rückseite **R.** Die übrigen Bereiche, wie die Anschlussflanken **100,** die Oberkante **103,** die Wandung **108** und die Versteifungsmittel **109** sind in ihrer Ausführung und Funktion zu den Figuren 1A bis 1D unverändert. Die Höhe des zweiten Elements **12** beträgt z.B. ebenfalls in einer Systemgrösse 1900mm.

### Figuren 3A bis 3C

Das dritte Wandelement **13** hat ebenso eine rechteckförmige Fläche, welche noch stärker gebogen ist und somit z.B. einen kleineren Winkel von 105° einschliesst. Die Frontseite **F** ist dabei wiederum die konkave Seite, gegenüberliegend davon befindet sich die konvexe Rückseite **R.** Auch hier bleiben die weiteren Bereiche, wie die Anschlussflanken **100,** die Oberkante **103,** die Wandung **108** und die Versteifungsmittel **109** in ihrer Ausführung und Funktion zu den vorherigen Wandelementen **11,12** unverändert. Innerhalb einer bestimmten Systemgrösse hat das dritte Element **13** die Einheitshöhe von 1900mm.

### Figuren 4A bis 4E

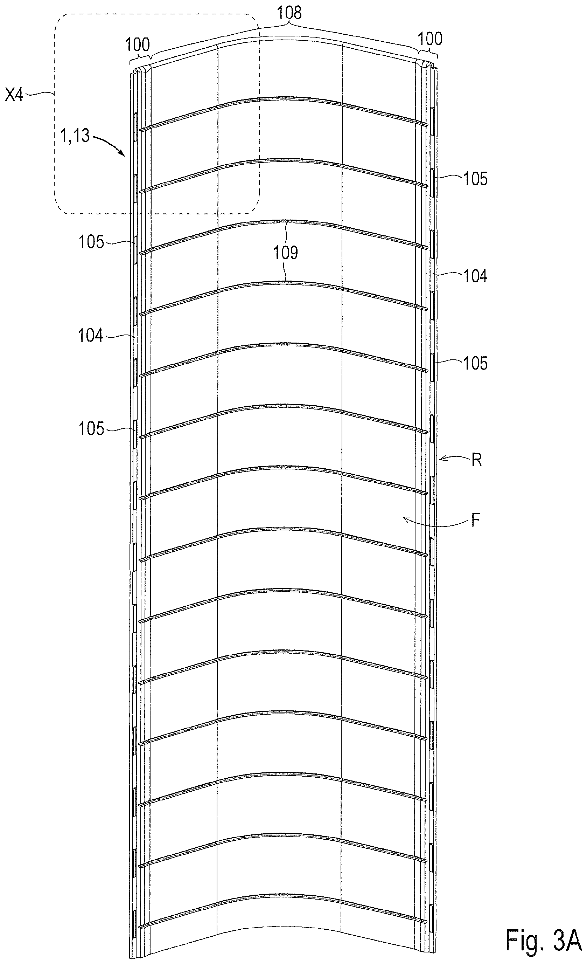

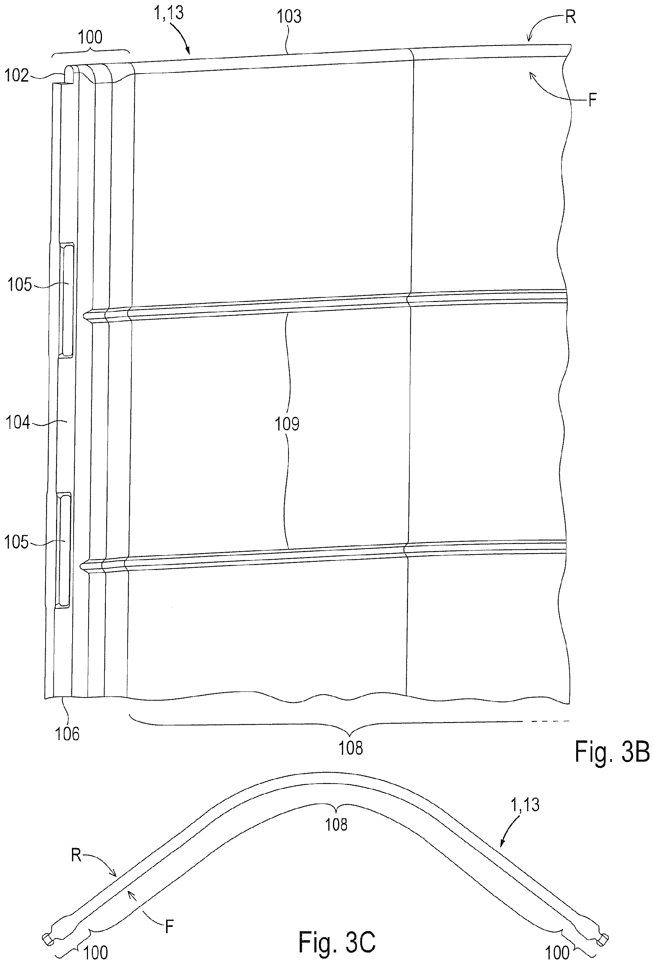

Das vierte Wandelement **14** ist ein sternförmiger Zusammenschluss von insgesamt drei Teilelementen **18.** Die einzelnen Teilelemente **18** sind rechteckförmige Flächenelemente, wobei eines davon einen Winkel von 150° hat und die beiden übrigen je einen Winkel von 105° besitzen, so dass in der Summe ein Winkel von 360° resultiert. Die konkaven Seiten bilden die Frontseiten **F,** denen die konvexen Rückseiten **R** gegenüberliegen. Das Teilelement **18** mit dem Winkel von 150° ist exakt die eine Hälfte des zweiten Elements **12** aus den Figuren 2A bis 2C, wobei sich der Schnittverlauf in vertikaler Richtung mittig entlang der Oberkante **103** erstreckt. Die beiden übrigen Teilelemente **18** mit den Winkeln von 105° sind exakt die jeweiligen Hälften des dritten Elements **13** gemäss den Figuren 3A bis 3C, wobei auch hier der Schnittverlauf in vertikaler Richtung entlang der Oberkante **103** liegt.

Nachfolgend wird nur ein Teilelement **18** mit dem Winkel von 105° beschrieben, da das andere Teilelement **18** im Aufbau identisch ist und sich lediglich mit dem Winkel von 150° dazu unterscheidet. Entlang der in vertikaler Richtung verlaufenden Längsseiten ist jeweils eine Teilflanke **180** vorhanden. Die Teilwandung **188** erstreckt sich zwischen den beiden sich beabstandet gegenüberliegenden Teilflanken **180.** Da beide Teilflanken **180** identisch beschaffen sind, bedarf es nur der Beschreibung einer solchen. Ausgehend von der Wandung **108** erweitert sich zunächst die Teilflanke **180** bis in etwa der Hälfte ihrer Länge auf der Frontseite **F** mit einer Teilwulst **187.** Angrenzend an die Teilwulst **187** verjüngt sich dann die Teilflanke **180** wiederum auf der Frontseite **F** hin zu einer Teillippe **186,** welche mit einem freien Ende abschliesst und die Aussenkante entlang der Längsseite des Teilelements **18** bildet. Von der Teillippe **186** erheben sich über die gesamte Längsseite hinweg auf der Frontseite **F** die Teilkonturen **185,** welche identisch, allerdings nur einseitig zu den Konturen **105** ausgebildet sind. Zwischen den Teilkonturen **185** verbleibt auf der Frontseite **F** jeweils ein Zwischenraum **104.** Die Teilkante **183** verläuft in horizontaler Richtung entlang der Teilwandung **188** sowie über die Teilflanken **180** und ist wiederum eine verfestigte Pinch-Kante, welche werkzeugtechnisch hergestellt wird und ebenso keiner zusätzlichen Nachbearbeitung bedarf.

Das Ausgangsmaterial für das vierte Wandelement **14** ist unverändert. Beim Pressvorgang wird die entsprechende Polyestervliesseite in die jeweilige Werkzeughälfte gelegt, wobei die andere Werkzeughälfte als ebene Fläche beschaffen ist, um eine im Prinzip glatte Rückseite **R** zu erzeugen. Beim Pressvorgang fahren die beiden Werkzeughälften unter erhöhter Temperatur bei ca. 190°C zusammen, so dass das Polyestervlies mittels Druck auf 6mm Dicke im Bereich der Teilwandung **188** verdichtet wird. Während des Pressvorganges wird mittels der beiden Werkzeughälften und der Pinch-Technik die Teilkante **183** - hier z.B. als Viertelkreis beschaffen - fertig ausgebildet und das Polyestervlies entlang der Teilkante **183** zusätzlich verdichtet. Die übrigen am vierten Wandelement **14** vorhandenen Sektionen, wie die Teilkonturen **185,** die Teillippen **186,** die Teilwülste **187** und die Versteifungsmittel **109** werden durch die komplementären Bereiche in der Werkzeughälfte während des Pressvorgangs geschaffen. Dabei sind die Versteifungsmittel **109** und die Teillippen **186** am stärksten verpresst, da hier die Materialdicke des Polyestervlieses am geringsten ist, wohingegen die Teilwülste **187** am schwächsten verpresst sind, da hierbei die Materialdicke am stärksten ist. Nach dem Pressvorgang fahren die zwei Werkzeughälften wieder auseinander, und der Materialüberstand des verpressten Polyestervlieses wird an seinen beiden Längskanten und an seiner der Teilkante **183** gegenüberliegenden Unterkante z.B. mittels Wasserstrahlschneidens entfernt, so dass das Teilelement **18** die gewünschten Abmasse von z.B. 1900mm Länge erhält.

Die drei einzelnen Teilelemente **18** werden nach dem Pressvorgang zusammengefügt, wobei die Rückseite **R** des Teilelements **18** von 150° an den beiden Rückseiten **R** der Teilelemente **18** mit je 105° liegt sowie die beiden Rückseiten **R** der Teilelemente mit je 105° aneinander liegen und an den sich jeweils berührenden Stellen die Wandung **108** bilden. Die Verbindung der einzelnen Teilelemente **18** kann man mit einer Klebefolie erzeugen. Durch das Zusammenfügen der Teilelemente **18** entstehen ausserdem in Richtung derer freien Enden, benachbart zur Wandung **108,** die drei Anschlussflanken **100.** Der mittlere Bereich des zusammengefügten vierten Elements **14** ist als Zentrum **141** beschaffen, wobei sich im Zentrum **141** die jeweiligen Rückseiten **R** der Teilelemente **18** beabstandet gegenüberliegen und zwischen sich einen Hohlraum bilden. Die im Zentrum **141** z.B. als Viertelkreis beschaffenen Teilkanten **183** ergänzen sich am Übergang zu den Wandungen **108** zu halbkreisförmigen Oberkanten **103.** Der vom Zentrum **141** gebildete Hohlraum lässt sich mittels einer zum Zentrum **141** komplementären Abdeckung - hier nicht gezeigt - verschliessen. Dadurch sind nur die Oberkanten **103** an den später realisierten Aufbauten als einzige Kanten sichtbar, und der formschöne Abschluss hebt den optischen Effekt hervor. Entlang der entsprechenden Längsseiten, die jeweils in vertikaler Richtung verlaufen, sitzt die entsprechende Anschlussflanke **100.** Ein Freischnitt **102** als Absatz ist an der Aussenkante im Bereich der Lippe **106** an der Oberkante **103** vorhanden. Die übrigen Bereiche, wie die Konturen **105,** die Zwischenräume **104** und die Versteifungsmittel **109** sind in ihrer Ausführung und Funktion zu den Vorgängerfiguren unverändert. Die Höhe des vierten Elements **14** würde man im beispielhaften Grössensystem auf 1900mm bemessen.

### Figuren 5A bis 5C

Das Seitenelement **2** hat ebenso wie die Wandelemente **1** eine rechteckförmige, im Prinzip ebene Fläche mit Frontseite **F** und Rückseite **R.** Entlang einer der in vertikaler Richtung verlaufenden Längsseiten ist eine Anschlussflanke **20** vorhanden, die sich zur gegenüberliegenden Längsseite mit einem Flügel **21** fortsetzt. Ausgehend vom Flügel **21** erweitert sich zunächst die Anschlussflanke **20** bis in etwa der Hälfte ihrer Länge auf der Frontseite **F** und der Rückseite **R** mit einer Wulst **27.** Angrenzend an die Wulst **27** verjüngt sich dann die Anschlussflanke **20** wiederum auf der Frontseite **F** und der Rückseite **R** hin zu einer Lippe **26,** welche mit einem freien Ende abschliesst und die Aussenkante entlang der Längsseite des Seitenelements **2** bildet. Von der Lippe **26** erheben sich über die gesamte Längsseite hinweg auf der Frontseite **F** und der Rückseite **R** mehrere zueinander beabstandete rechteckförmige, längliche Konturen **25.** Zwischen den Konturen **25** verbleibt auf der Frontseite **F** und der Rückseite **R** jeweils ein Zwischenraum **24.** Die Oberkante **23** verläuft in horizontaler Richtung entlang der Anschlussflanke **20** sowie dem Flügel **21** und ist eine verfestigte Pinch-Kante, welche werkzeugtechnisch hergestellt wird und keiner zusätzlichen Nachbearbeitung bedarf. Entlang der Längsseite des Seitenelements **2,** die der Lippe **26** gegenüberliegt, setzt sich die Pinch-Kante in vertikaler Verlaufsrichtung bis zum unteren Ende des Seitenelements **2** fort. Der Übergang zwischen der Oberkante **23** und dieser Längsseite des Seitenelements **2** ist abgerundet. Ein absatzförmiger Freischnitt **22** ist an der Oberkante **103** und der Aussenkante im Bereich der Lippe **26** vorhanden. Mehrere parallel zueinander beabstandete Versteifungsmittel **29** der bereits beschriebenen Art erstrecken sich in horizontaler Richtung im Bereich der Anschlussflanke **20** und enden quasi an der Lippe **26.**

### Figuren 6A bis 6C

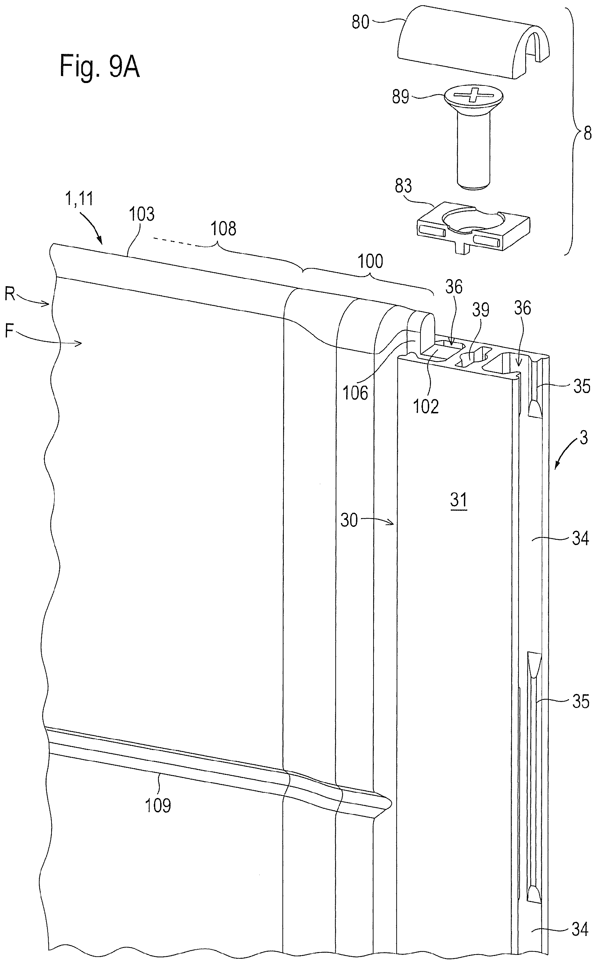

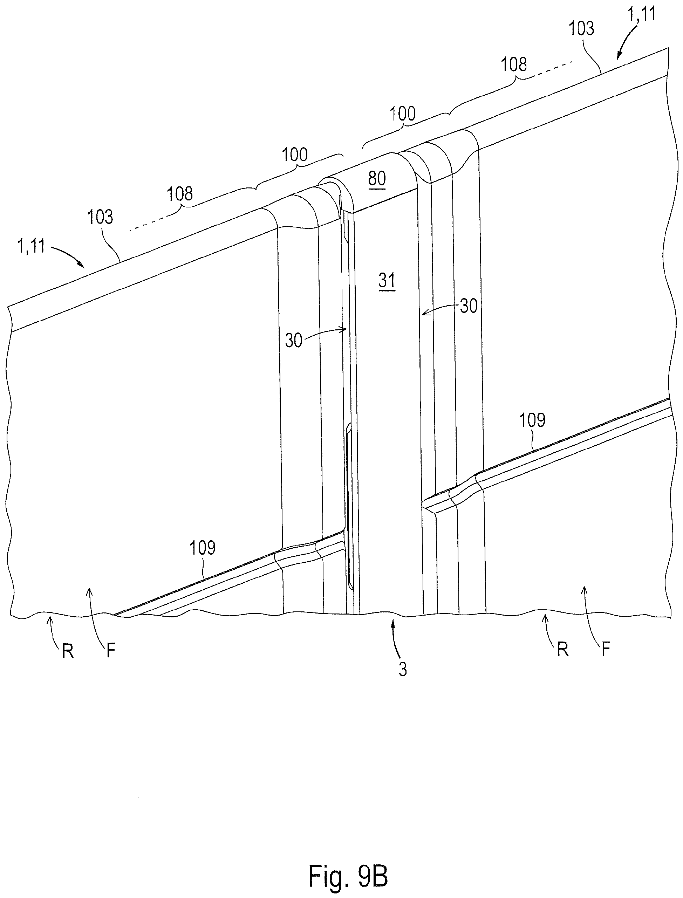

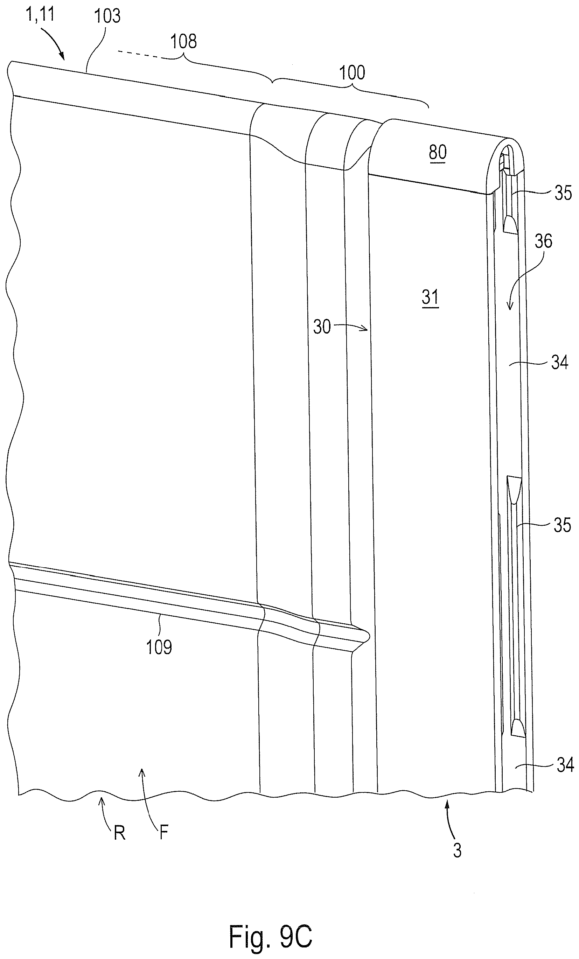

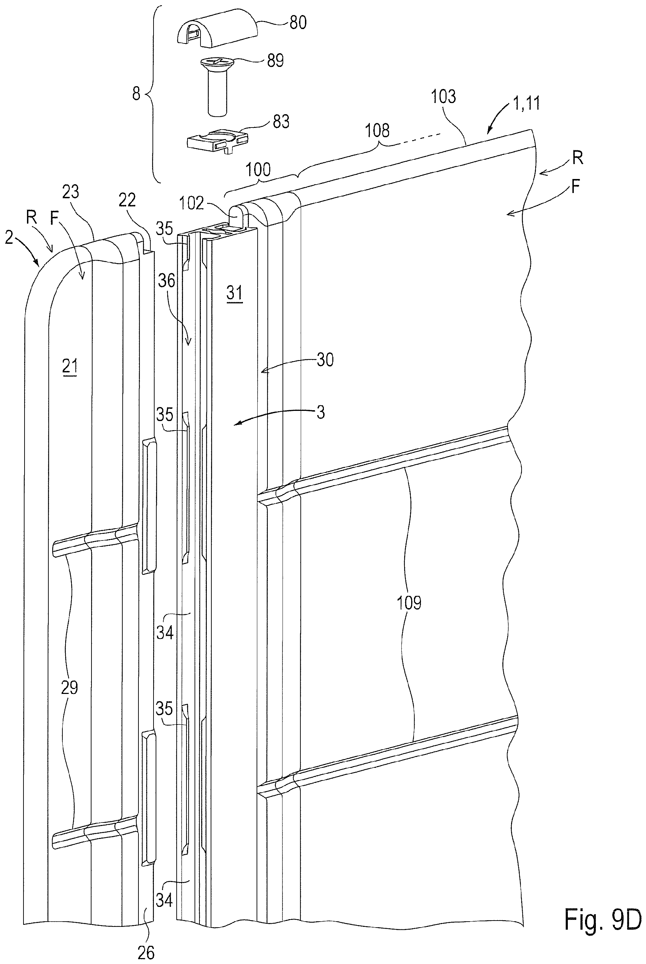

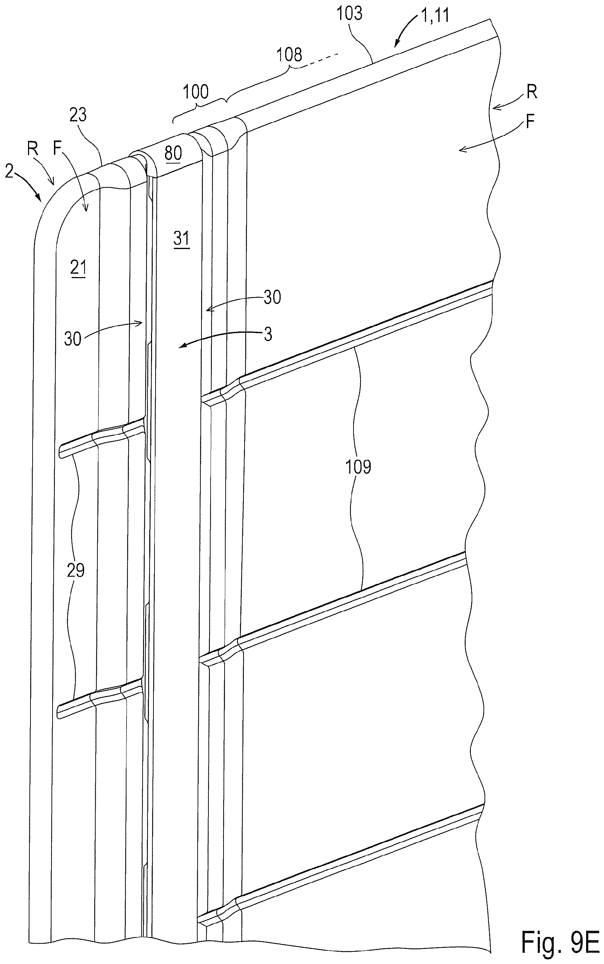

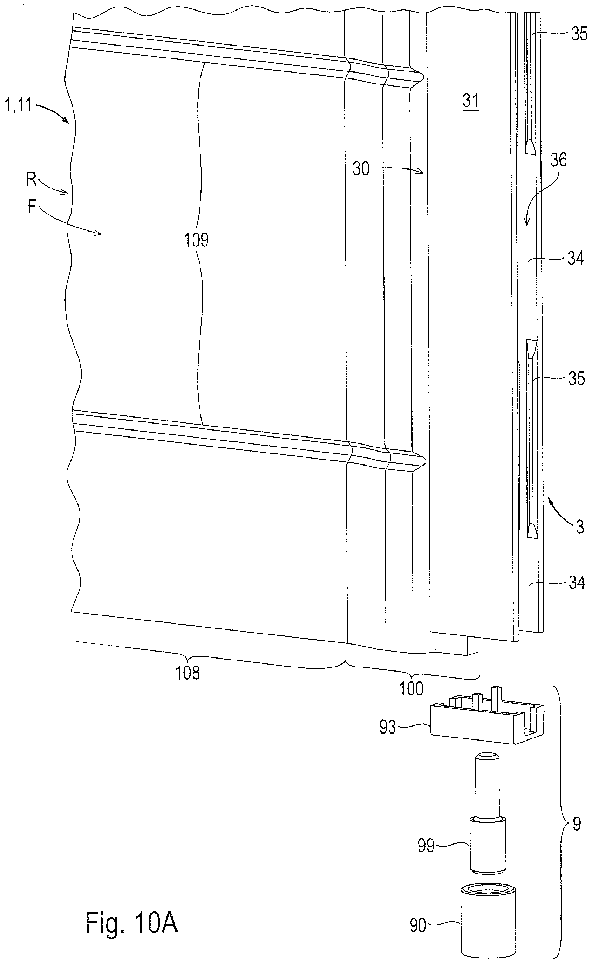

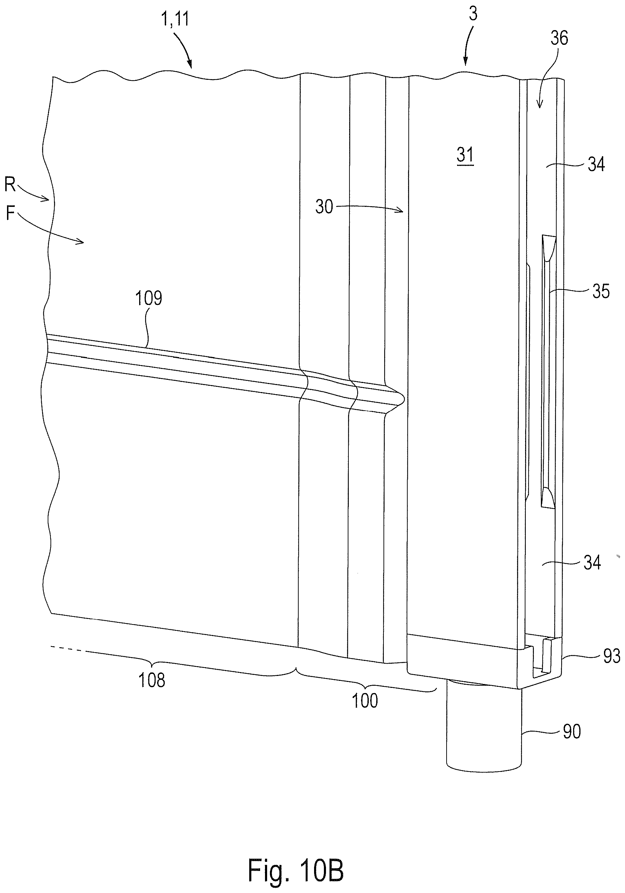

Der Verbinder **3** *erster Variante* hat die Form eines H-Profils und besitzt die beiden Schenkel **31** mit ihren planförmigen Aussenflächen. Zwischen den Schenkeln **31** erstreckt sich der Mittelsteg **32,** wobei die Schenkel **31** beidseits je einen Anschluss **30** umschliessen. Die Anschlüsse **30** sind identisch beschaffen, so dass nachfolgend nur ein Anschluss **30** beschrieben wird. Ein Anschluss **30** besteht im wesentlichen aus einer Nut **36,** die sich über die gesamte Länge des Verbinders **3** erstreckt, zur Schmalseite hin offen ist und seitlich von den beiden zueinander benachbarten Streben begrenzt wird. Am freien Ende jeder Strebe ist an der Innenwandung abschnittsweise ein zur Mündung der Nut **36** gerichteter Vorsprung vorgesehen. Paarweise bilden die Vorsprünge die Gegenkonturen **35,** welche somit die Nut **36** von beiden Seiten verengen. Zwischen den einzelnen Gegenkonturen **35** verbleibt ein Zwischenraum **34.** Der Verbinder **3** wird zentrisch in Längsrichtung von einem Schraubkanal **39** durchragt, der innerhalb des Mittelstegs **32** liegt und an den offenen Enden jeweils ein Gewinde besitzt, welches zur Befestigung der später beschriebenen Abdeckbaugruppe **8** nutzbar wäre (s. Figuren 9A bis 9E) bzw. der Fussbaugruppe **9** (siehe Figuren 10A und 10B).

### Figuren 6D bis 6F

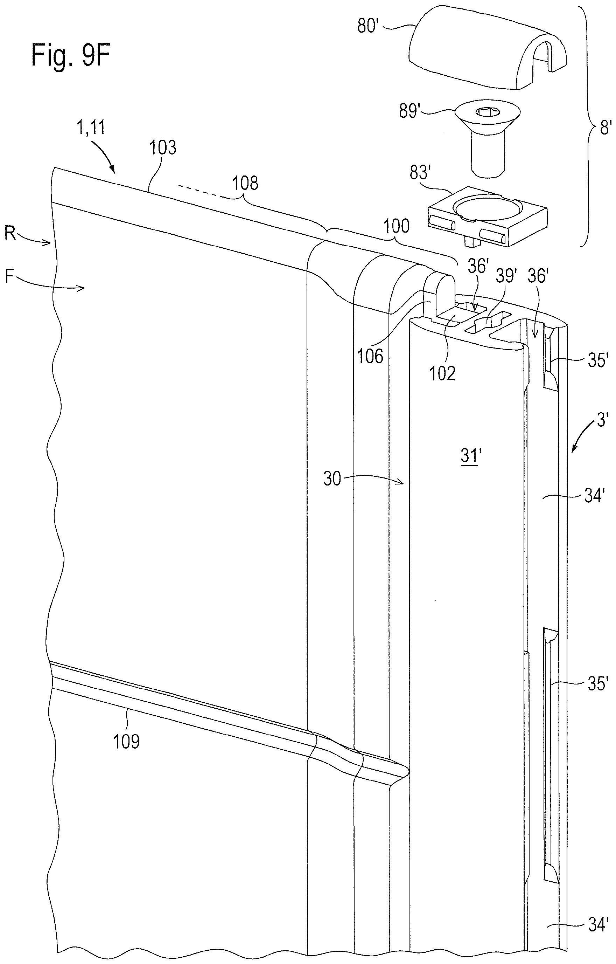

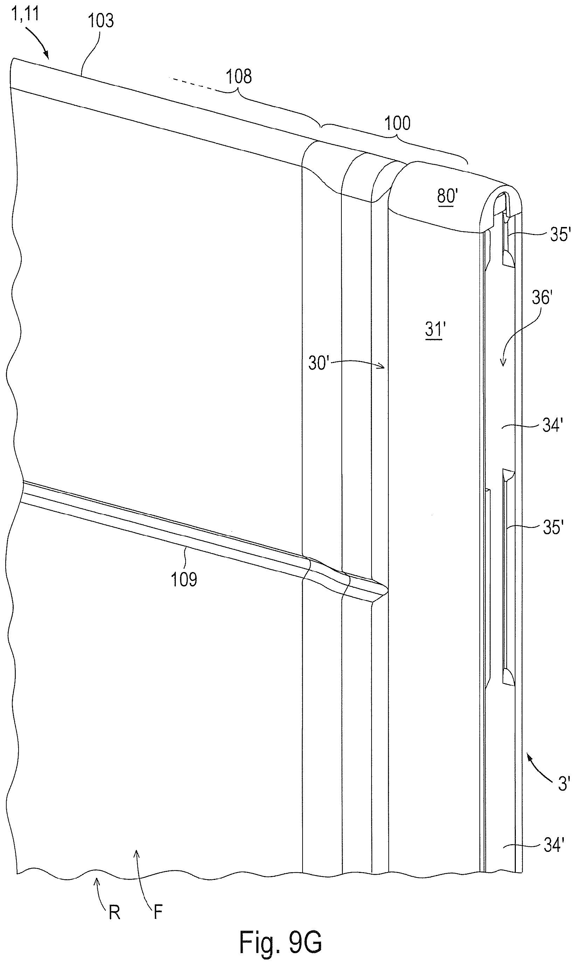

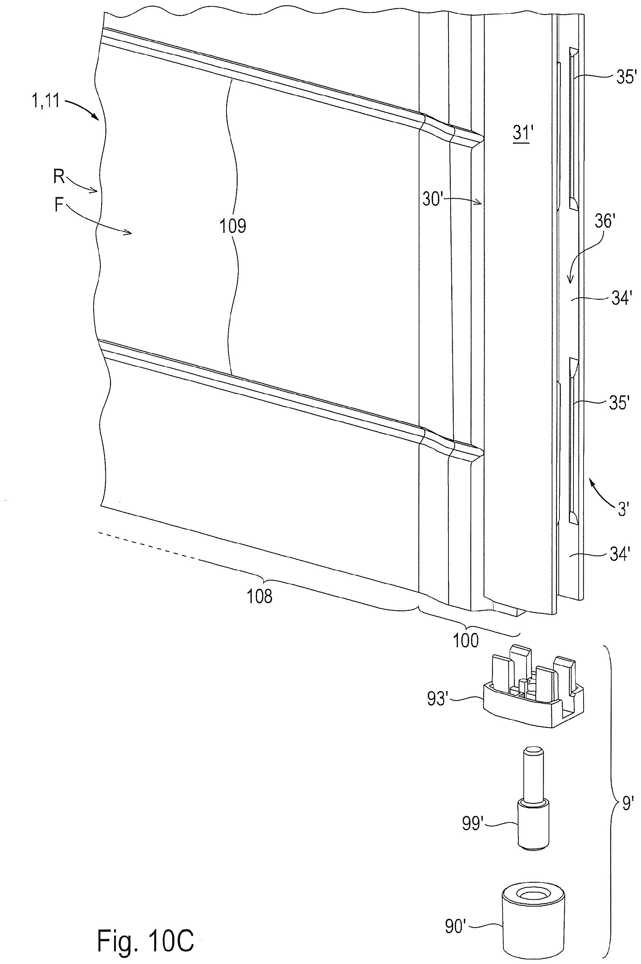

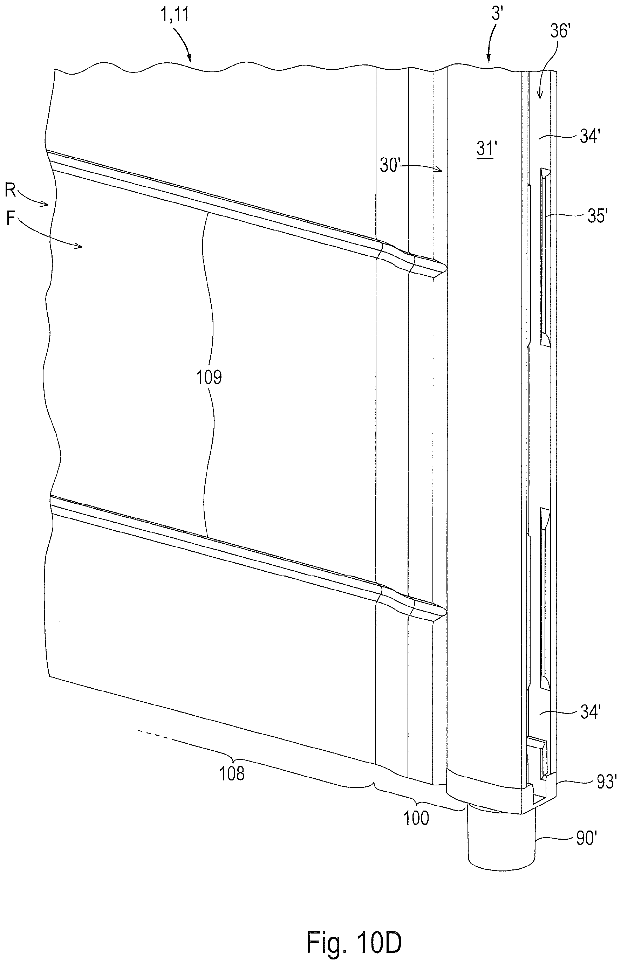

Am Verbinder **3'** *zweiter Variante* sind alle äquivalenten Konturen, die sich am Verbinder **3** *erster Variante* befinden mit gleichen Bezugsziffern, aber mit Zusatz eines hochgestellten Striches [ ' ] versehen. Insoweit bedarf es keiner wiederholenden Beschreibung. Der einzige formgestalterische Unterschied am Verbinder ***3'** zweiter Variante* besteht darin, dass die beiden Schenkel **31'** keine durchgängig planförmigen Aussenflächen besitzen, sondern deren Längskanten paarweise auf den jeweiligen Anschluss **30'** hin abgerundet sind. Der Schraubkanal **39'** steht zur Befestigung der Abdeckbaugruppe **8'** *zweiter Variante* (s. Figuren 9F und 9G) bzw. der Fussbaugruppe **9'** *zweiter Variante* (siehe Figuren 10C und 10D) zur Verfügung.

### Figuren 7A bis 7C

Zwei dritte Elemente **13** sind mit ihren jeweiligen Anschlussflanken **100** dem Verbinder **3** *erster Variante* zunächst angenähert. Dabei zeigt die entsprechende Lippe **106** in Fluchtrichtung zur Nut **36.** An der links aussen gelegenen Längsseite des dritten Elements **13** ist der Verbinder **3** bereits angedockt, so dass die Lippe **106** in der Nut **36** aufgenommen wird. Der zwischen den beiden dritten Elementen **13** stehende Verbinder **3** würde sich in der dargestellten Position nicht an die Anschlussflanken **100** der angenäherten Wandelemente **13** andocken lassen. Hierzu bedarf es der Ausrichtung der Zwischenräume **34** auf die Konturen **105.**

### Figuren 8A bis 8C

Zwei erste Elemente **11** sind am jeweiligen Anschluss **30** des Verbinders **3** *erster Variante* angedockt. Dabei kommen die Lippen **106** sowie die Konturen **105** von den ersten Elementen **11** in den Nuten **36** des Verbinders **3** zu liegen und die Gegenkonturen **35** des Verbinders **3** hintergreifen dabei quasi die Konturen **105** der ersten Elemente **11.** Die Wülste **107** liegen dabei in einer Linie mit den jeweiligen Aussenkanten des Verbinders **3,** wobei zwischen Verbinder **3** und den Wülsten **107** ein kleiner Spalt verbleibt.

### Figuren 9A bis 9E

Die Abdeckbaugruppe **8** *erster Variante* ist dem Verbinder **3** *erster Variante* zunächst angenähert, an welchem lediglich auf einer Seite ein erstes Element **11** am zugewandten Anschluss **30** angedockt ist. Die Abdeckbaugruppe **8** besteht aus der Kappe **80,** dem Aufsatzteil **83** und der Schraube **89.** Der Verbinder **3** schliesst mit seiner Oberkante bündig mit dem an der Lippe **106** vorhandenen Freischnitt **102** ab. Damit kann das Aufsatzteil **83** formgerecht auf dem oberen Ende des Verbinders **3** positioniert und verschraubt werden. Somit wird ein aufwärts gerichtetes Verschieben des angedockten Wandelements **11** im Verbinder **3** verhindert, was zur Seitenstabilität des Aufbaus beiträgt. Die zuletzt aufgesetzte Kappe **80** hat nur Dekorationsfunktion.

### Figuren 9F und 9G

An der Abdeckbaugruppe **8'** *zweiter Variante* sind alle äquivalenten Konturen, die sich an der Abdeckbaugruppe **8** *erster Variante* befinden mit gleichen Bezugsziffern, aber mit Zusatz eines hochgestellten Striches [ ' ] versehen. Insoweit bedarf es keiner wiederholenden Beschreibung. Der einzige formgestalterische Unterschied an der Abdeckbaugruppe **8'** *zweiter Variante* besteht darin, dass die Aussenkontur der Kappe **80'** zwecks harmonischem Übergang dem Wölbungsverlauf der Schenkel **31'** des Verbinders **3'** *zweiter Variante* angepasst ist.

### Figuren 10A und 10B

Die Fussbaugruppe **9** *erster Variante* umfasst das auf einem Bolzen **99** in der Höhe nivellierbares Bodenelement **90** sowie ein quaderförmiges Fügeteil **93,** welches man auf das untere Ende des Verbinders **3** *erster Variante* aufsteckt. Der Bolzen **99** ist im Schraubkanal **39** des Verbinders **3** montiert.

### Figuren 10C und 10D

An der Fussbaugruppe **9'** *zweiter Variante* sind alle äquivalenten Konturen, die sich an der Fussbaugruppe **9** *erster Variante* befinden mit gleichen Bezugsziffern, aber mit Zusatz eines hochgestellten Striches [ ' ] versehen. Insoweit bedarf es keiner wiederholenden Beschreibung. Der einzige formgestalterische Unterschied an der Fussbaugruppe **9'** *zweiter Variante* besteht darin, dass die Aussenkontur des Fügeteils **93'** zwecks harmonischem Übergang dem Wölbungsverlauf der Schenkel **31'** des Verbinders **3'** *zweiter Variante* angepasst ist.

### Figuren 11A, 11B und 12A bis 12J

Der Adapter **4** *erster Variante* in Gestalt als Tischplattenhalter besteht aus einem Basisteil **40** und dem damit verschraubbaren Gegenstück **46.** Das Basisteil **40** besitzt die Oberseite **41** mit den hier mündenden Befestigungslöchern **42** sowie die Zunge **43** mit den Löchern **42** und der am Ende befindenden ersten Hakenkontur **44.** Das Gegenstück **46** hat Löcher **47,** um die Schrauben **49** zwecks Verbindung mit dem Basisteil **40** einzubringen, und die zweite Hakenkontur **48.** Weitere Schrauben **49** dienen der Befestigung einer Tragfläche **5** mit deren Unterseite **51** auf der Oberseite **41** des Basisteils **40.** Beide Hakenkonturen **44,48** bilden im zusammengesetzten Zustand eine Klaue, die zum Umfassen des Verbinders **3** *erster Variante* mit Eingriff der Hakenkonturen **44,48** in einen gewählten Zwischenraum **34** bestimmt ist. Die Oberseite **50** der montierten Tragfläche **5** ist als Arbeitsplatte oder Ablage nutzbar. Die Hakenkonturen **44,48** finden in den Nuten **36** des Verbinders **3** an den eingefügten Lippen **106** Platz.

### Figuren 11C, 11D, 12D und 12E

Am Adapter **4'** *zweiter Variante* sind alle äquivalenten Konturen, die sich am Adapter **4** *erster Variante* befinden mit gleichen Bezugsziffern, aber mit Zusatz eines hochgestellten Striches [ ' ] versehen. Insoweit bedarf es keiner wiederholenden Beschreibung. Der einzige Unterschied am Adapter **4'** *zweiter Variante* zur Erhöhung der mechanischen Festigkeit besteht darin, dass die Zunge **43'** am Basisteil **40'** sowie das Gegenstück **46'** massiver ausgebildet sind. Montage und Eingriff des Adapters **4'** *zweiter Variante* am Verbinder **3'** *zweiter Variante* sind zur ersten Variante von Adapter **4** und Verbinder **3** unverändert.

### Figuren 13A und 13B

Dieser Adapter **4** *dritter Variante* ist als Tablarhalter mit verschmälerter Oberseite **41** ausgebildet und hat ansonsten im Prinzip die gleichen Merkmale wie die Adapter **4,4'** gemäss *erster* und *zweiter Variante* und wird in äquivalenter Weise montiert. Die Schraubenlöcher **42** im Basisteil **40** mit den Schrauben **49** dienen der Befestigung eines aufgesetzten Tablars.

### Figuren 13C und 13D

Am Adapter **4'** *vierter Variante,* der ebenfalls als Tablarhalter ausgebildet ist, sind alle äquivalenten Konturen, die sich am Adapter **4** *dritter Variante* befinden mit gleichen Bezugsziffern, aber mit Zusatz eines hochgestellten Striches [ ' ] versehen. Somit erübrigt sich die erneute Beschreibung. Zur Erhöhung der mechanischen Festigkeit hat der Adapter **4'** *vierter Variante* wiederum am Basisteil **40'** eine massiver gestaltete Zunge **43'** sowie ein stärkeres Gegenstück **46'.** Montage und Eingriff des Adapters **4'** *vierter Variante* an den Verbindern **3,3'** sowie die Befestigung eines aufgesetzten Tablars sind unverändert.

### Figuren 14A bis 14C

Dieser Adapter **4** *fünfter Variante* ist als Sitzhalter konfiguriert und umfasst zunächst ebenfalls ein Basisteil **40** mit den Schraubenlöchern **42,** der Zunge **43** und der ersten Hakenkontur **44.** Vom Basisteil **40** erheben sich Zapfen **45.** Das zugehörige Gegenstück **46** weist die Schraubenlöcher **47** sowie die zweite Hakenkontur **48** auf. Zur Verbindung zwischen Basisteil **40** und Gegenstück **46** sowie zwecks Montage eines Sitzes dienen die Schrauben **49.**

### Figuren 14D bis 14F

Am Adapter **4'** *sechster Variante,* der ebenfalls als Sitzhalter ausgebildet ist, sind alle äquivalenten Konturen, die sich am Adapter **4** *fünfer Variante* befinden mit gleichen Bezugsziffern, aber mit Zusatz eines hochgestellten Striches [ ' ] versehen. Auf die erneute Beschreibung wird daher verzichtet. Zur Erhöhung der mechanischen Festigkeit sind vom Adapter **4'** *sechster Variante* das gesamte Basisteil **40'** und das Gegenstück **46'** stabiler beschaffen. Montage und Eingriff des Adapters **4'** *sechster Variante* an den Verbindern **3,3'** sowie die Befestigung eines Sitzes entsprechen dem Adapter **4** *fünfter Variante.*

### Figur 15A

Die Bauteile zum Aufbau einer Kabine *erster Variante* umfassen zunächst zwei den äusseren Abschluss bildende Seitenelemente **2,** jeweils zwei zweite Wandelemente **12** und dritte Wandelemente **13** sowie ein erstes Wandelement **11.** Zwischen jedem Seitenelement **2** und Wandelement **11-13** ist ein Verbinder **3** *erster Variante* vorgesehen. Die Adapter **4** *erster Variante* sind bereits teilweise montiert bzw. bereitgestellt um eine Tragfläche **5** zu installieren, die eine Ausnehmung **52** zum Einfügen eines Steckdoseneinsatzes **53** hat. Im zusammengebauten Zustand ruht die Tragfläche **5** fixiert auf den Adaptern **4.**

### Figuren 15B bis 15D

Bei der errichteten Kabine *zweiter Variante* ruht die Tragfläche **5** auf den an den Verbindern **3** *erster Variante* fixierten Adaptern **4** *erster Variante,* wobei an der Tragflächenunterseite **51** ein Behältnis **54** mittels Schrauben **59** fixiert ist (s. Figuren 15B, 15C). Bei diesem Kabinenaufbau *dritter Variante* ist die Tragfläche **5** innerhalb der Kabine in höherer Position angeordnet, um einem stehenden Benutzer Arbeitsfläche zu bieten (s. Figur 15D).

### Figuren 16A bis 16C

Diese Figurenfolge illustriert Aufbau und Befestigung einer Sitzbank **6,** die einen plattenförmigen Sitzträger **61** und ein darauf zu positionierendes Polster **63** sowie eine Lehne **64** umfasst. Bügel **62** untergreifen befestigt den Sitzträger **61** und sind anderseits auf der Rückseite der Lehne **64** fixiert. Ein T-förmiges Gerüst **60** dient als Träger für die komplette Sitzbank **6** und ist auf mehreren Adaptern **4** *fünfter Variante* zur Montage vorbereitet.

### Figuren 17A und 17B

Bei der errichteten Kabine *vierter Variante* werden die Installation von zwei Sitzbänken **6** und einer dazwischen positionierten Tragfläche **5** als Tisch innerhalb einer geräumigen Kabine dargestellt. Bei diesem komplexeren Aufbau wird die Tragfläche **5** von einer darunter montierten Stütze **55** gehalten, und zur Stabilisierung beider Sitzbänke **6** ist eine Querstrebe **65** vorgesehen, um die Sitzbänke **6** miteinander zu verbinden.

### Figuren 18A und 18B

Im dargestellten Kabinenaufbau *fünfter Variante* ist eine Tragfläche **5** mit Behältnis **54** und Steckdoseneinsatz **53** installiert, jedoch keine Sitzgelegenheit.

### Figuren 19A und 19B

Der erneut erweiterte Kabinenaufbau sechster Variante hat ebenfalls einen symmetrischen Grundriss und umfasst nunmehr sieben Wandelemente **1,** nämlich ein erstes Element **11,** zwei zweite Elemente **12** und vier dritte Elemente **13,** sowie zwei Seitenelemente **2,** die den Zugang in den Kabinenaufbau flankieren. Innerhalb des Kabinenaufbaus ist eine Tragfläche **5** montiert, welche sich entlang dem Innenumfang der Kabine erstreckt.

### Figuren 20A und 20B

Bei diesem komplexen Aufbau ergeben sich mehrere zueinander benachbarte Kabinen, die mittels einer Vielzahl von untereinander verbundenen vierten Wandelementen **14** voneinander abgeteilt sind. Der Einbau der vierten Wandelemente **14** mit den jeweils drei Anschlussflanken **100** veranschaulicht die besonders variablen Kombinationsmöglichkeiten.

### Figuren 21A bis 21D

Die rohrförmige Stütze **7** *erster Variante* hat eine Rückseite **70** und eine Frontseite **71,** welche die beiden Längsseiten bilden, die sich parallel gegenüberliegen. Zwischen Rückseite **70** und Frontseite **71** hat die Stütze **7** entlang ihrer beiden Schmalseiten je eine Rundung sowie mittig einen Mittelsteg **78.** Auf der Rückseite **70** befindet sich ein doppelreihiges Schlitzraster **72,** so dass jeweils die zwei Schlitze eines Paars auf gleicher Höhe liegen. Im Mittelsteg **78** befindet sich ein die Stütze **7** durchlaufender Schraubkanal **79,** welcher zur Befestigung der Bodenbaugruppe **73** *erster Variante* nutzbar ist. Die Bodenbaugruppe **73** umfasst das auf einem Bolzen **75** in der Höhe nivellierbares Bodenelement **76** sowie ein quaderförmiges Fügeteil **74,** welches man auf das untere Ende der Stütze **7** aufsteckt. Das Gewindeteil des Bolzens **75** ist zum Eingriff in den Schraubkanal **79** bestimmt.

### Figuren 21E bis 21G

An der Stütze **7'** *zweiter Variante* sind alle äquivalenten Konturen, die sich an der Stütze **7** *erster Variante* befinden mit gleichen Bezugsziffern, aber mit Zusatz eines hochgestellten Striches [ ' ] versehen. Insoweit bedarf es keiner wiederholenden Beschreibung. Der einzige formgestalterische Unterschied an der Stütze **7'** *zweiter Variante* besteht darin, dass die Rück- und Frontseite **70',71'** keine durchgängig planförmigen Aussenflächen besitzen, sondern deren Längskanten paarweise auf die jeweilige Schmalseite hin abgeflacht sind, so dass die Schmalseiten der Stütze **7'** im Prinzip konisch ausgebildet sind. Der Schraubkanal **79'** steht zur Befestigung einer Bodenbaugruppe **73'** *zweiter Variante* zur Verfügung, deren Fügeteil dem Querschnitt der Stütze **7'** angepasst ist.

### Figuren 21H bis 21L

Der Adapter **4'** *vierter Variante* in Gestalt als Tablarhalter ist bereits im Figurenpaar 13C und 13D beschrieben, somit erübrigt sich die erneute Beschreibung. Die beiden Hakenkonturen **44',48'** des Adapters **4'** sind zum Eingriff in die beiden Schlitze eines für die gewünschte Höhe ausgewählten Paars vom Schlitzraster **72** bestimmt und sind im montierten Zustand darin klauenförmig verkrallt. Die Befestigung einer auf die Adapter **4'** aufgesetzten Tragfläche **5** ist unverändert (s. Figuren 15B bis 15D). Der Adapter **4'** kann in gleicher Weise an der Stütze **7'** *zweiter Variante* montiert werden.

### Figuren 22A bis 22C

Dieser geräumige Kabinenaufbau *siebter Variante* illustriert die Installation von zwei übereinander liegenden Ebenen einer Regalanordnung, bestehend aus einer Vielzahl einzelner Tragflächen **5** - deren Oberseiten **50** sind als Arbeitsplatte oder Ablage nutzbar -, Adaptern **4'** *vierter Variante,* Auflagen **56** und Stützen **7** *erster Variante* mit Einbeziehung der im Kabinenaufbau montierten Verbinder **3'** *zweiter Variante.*

Entsprechend der konzipierten Höhe, auf welcher die Regalebenen liegen sollen, sind hintere Adapter **4'** an den Verbindern **3'** positioniert. Jeweils zwischen zwei Verbindern **3'** eines Wandelements **1** und zwischen den beiden Verbindern **3'** der jeweils übernächsten Wandelemente **1** werden Stützen **7** mit Versatz in das Innere des Kabinenaufbaus aufgestellt, deren Länge sich nach der Höhe der obersten Regalebene bestimmt. In äquivalenter Höhe zu den an den Verbindern **3'** positionierten hinteren Adaptern **4'** werden vordere Adapter **4'** auf den Rückseiten **70** der Stützen **7** montiert. Auf den vorderen Adaptern **4'** befestigt man Halteplatten **56** mittels Schrauben **49'.** Die für untere Regalebenen bereitgestellten Tragflächen **5** sind an ihren Schmalseiten mit einer nach aussen mündenden Ausnehmung **58** versehen, welche dem halben Querschnitt einer Stütze 7 entspricht. Es stehen gerade Tragflächen **5,** leicht abgewinkelte sowie stärker abgewinkelte zwecks Anpassung an die Erstreckung der Wandelemente **1**;**11-14** zur Verfügung. Die Längen der Tragflächen **5** sind so zugeschnitten, dass sich diese über ein Wandelement **1;11-14** und jeweils hälftig über beide benachbarte Wandelemente **1;11-14** erstrecken.

Die eingesetzten Tragflächen **5** ruhen frontseitig mit ihren Unterseiten **51** auf den Halteplatten **56** und rückseitig direkt auf den an den Verbindern **3'** montierten Adaptern **4'** und sind mit den Schrauben **59,49'** befestigt. Zwei benachbarte Tragflächen **5** kommen dabei mit ihren aneinanderstossenden Schmalseiten jeweils hälftig auf einer Halteplatte **56** zu liegen, und zugleich steht jeweils ein halber Querschnitt einer Stütze **7** in den Ausnehmungen **58** der beiden Tragflächen **5,** während jede Tragfläche **5** rückseitig auf den beiden zugehörigen hinteren Adaptern **4'** aufsitzt, die zwischen den beiden vorderen Adaptern **4'** hängen.

### Figuren 23A und 23B

Innerhalb der Kabine *achter Variante* mit den Wandelementen **1;11-13** ist eine mehrteilige Sitzbank **6** angeordnet, wobei an deren beiden Enden jeweils eine Tragfläche **5** anschliessen kann. Die Sitzbank **6** besteht aus mehreren plattenförmigen Sitzträgern **61,** darauf ruhenden Polstern **63** sowie Lehnen **64** und ist auf einem Gerüst **60** montiert, auf dem auch die Tragflächen **5** positioniert sind. Das Gerüst **60** besteht zunächst aus Brückenstreben **66,** die an den Adaptern **4'** *sechster Variante* fixiert sind, welche an den Verbindern **3'** *zweiter Variante* vom Boden abgehoben montiert sind. Die Frontenden der Brückenstreben **66** sind mit einzelnen Längsstreben **68** verbunden, und Füsse **67** stützen die Längsstreben **68** gegen den Boden ab. Auf diesem Gerüst **60** sind Sitzbank **6** und Tragflächen **5,** vorzugsweise mit Schrauben, befestigt. In den Tragflächen **5** können Steckdoseneinsätze **53** vorgesehen sein.

### Figur 24

Innerhalb der Kabine *neunter Variante,* die z.B. als Küche nutzbar ist, sind jeweils mehrere Tragflächen **5** in zwei übereinander liegenden Horizontalebenen installiert. Die Halterung der Tragflächen **5** erfolgt wiederum rückseitig mit an den Verbindern **3'** montierten Adaptern **4'** *vierter Variante* und frontseitig mittels Stützen **7'** und Halteplatten **56** gemäss dem Prinzip der Figurenfolge 22A bis 22C. An geeigneten Positionen kann man in den Tragflächen **5** Steckdoseneinsätze **53** für den Betrieb elektrischer Geräte vorsehen. Zwischen den beiden Ebenen von Tragflächen **5** sind mehrere Schrankeinheiten **54** eingebaut, z.B. zur Unterbringung von Küchenutensilien und Vorräten. Die untere Ebene der Tragflächen **5** kann als Abstellraum genutzt werden, während die obere Ebene als Arbeitsfläche zur Verfügung steht.

### Figur 25

Innerhalb der Kabine *zehnter Variante,* die z.B. als Garderobe nutzbar ist, sind wiederum jeweils mehrere Tragflächen **5** in zwei übereinander liegenden Horizontalebenen installiert, nämlich erneut bodennah und dazu im mannshohen Abstand. Die Halterung der Tragflächen **5** erfolgt gemäss dem Prinzip der Figurenfolge 22A bis 22C, nämlich rückseitig mit an den Verbindern **3'** montierten Adaptern **4'** *vierter Variante* und frontseitig mittels Stützen **7'** und Halteplatten **56.** In den Tragflächen **5** hat man Steckdoseneinsätze **53** für den Betrieb elektrischer Geräte vorgesehen.

Zwischen den beiden Ebenen von Tragflächen **5** ist eine Vielzahl von vorzugsweise verschliessbaren Schrankeinheiten **54** eingebaut, z.B. zur sicheren Unterbringung von persönlichen Gegenständen, wie Taschen. Die untere Ebene der Tragflächen **5** lässt sich als Abstellraum nutzen, während unterhalb der obere Ebene z.B. Garderobenstangen angeordnet sind.

## Patentansprüche

1. Bausatz aus Wandelementen **(1,2)** und zwischen solchen einzufügenden Verbindern **(3,3')** zur Errichtung von Raumteilern, wobei
a) die Wandelemente **(1,2)** durch Verpressen von Fasermaterial hergestellt sind und zumindest eine Anschlussflanke **(100,20)** besitzen, die systematisch mit Konturen **(105,25)** versehen ist;
b) die Verbinder **(3,3')** als Profilschiene ausgebildet sind, an welcher zumindest ein Anschluss **(30,30')** vorhanden ist, der systematisch angeordnete Gegenkonturen **(35,35')** besitzt;
c) die Konturen **(105,25)** an den Wandelementen **(1,2)** sich mit den Gegenkonturen **(35,35')** an den Verbindern **(3,3')** in formschlüssigen Eingriff bringen lassen;
d) die Konturen **(105,25)** an den Anschlussflanken **(100,20)** der Wandelemente **(1,2)** kongruent auf deren Frontseite **(F)** und Rückseite **(R)** angeordnet sind und als erhabene Stege ausgebildet sind, die auf einer vertikalen Linie verlaufen;
e) die Verbinder **(3,3')** an zwei sich gegenüberliegenden Aussenkanten jeweils einen Anschluss **(30,30')** mit den systematischen Gegenkonturen **(35,35')** besitzen;
f) die Gegenkonturen **(35,35')** als erhabene paarweise Stege ausgebildet sind, welche auf einer vertikalen Linie verlaufen und die seitliche Mündung einer vertikalen Nut **(36,36')** verengen;
g) die Konturen **(105,25)** sich von einer Lippe **(106,26)** erheben, die sich von der Anschlussflanke **(100,20)** erstreckt, und die Breite der Lippe **(106,26)** im Mündungsspalt der Gegenkonturen **(35,35')** Platz findet; und
h) die Dimensionierung der Konturen **(105,25)** deren Einschieben durch die Zwischenräume **(34,34')** am Verbinder **(3,3')** erlaubt,
**dadurch gekennzeichnet, dass**
die Konturen **(105,25)** an den Anschlussflanken **(100,20)** der Wandelemente **(1,2)** auf der vertikalen Linie mit alternierenden Zwischenräumen **(104)** verlaufen und die Gegenkonturen **(35,35')** auf der vertikalen Linie mit alternierenden Zwischenräumen **(34, 34')** verlaufen.

2. Bausatz nach Anspruch 1, **dadurch gekennzeichnet, dass**
a) das zur Herstellung der Wandelemente **(1,2)** verwendete Fasermaterial ein verdichtetes Polyestervlies oder eine Mischung aus Natur- und synthetischen Fasern ist; und
b) der Verbinder **(3,3')** ein Strangpressprofil ist.

3. Bausatz nach einem der Ansprüche 1 und 2, **dadurch gekennzeichnet, dass**
a) bei den Wandelementen (**1;11-14**), welche zum Einbau innerhalb eines Raumteilers bestimmt sind, alle vertikalen Aussenkanten als Anschlussflanken **(100)** mit den systematischen Konturen **(105)** ausgebildet sind, wobei sich zwischen den Anschlussflanken **(100)** eine Wandung **(108)** erstreckt; und
b) ein separater Typ von Wandelementen **(2)** zum äusseren Abschluss an Raumteilern bestimmt ist, der nur an einer Aussenkante als Anschlussflanke **(20)** mit den systematischen Konturen **(25)** ausgebildet ist, wobei sich an die eine Anschlussflanke **(20)** ein Flügelabschnitt **(21)** anschliesst, der seitlich frei endet.

4. Bausatz nach Anspruch 2, **dadurch gekennzeichnet, dass** sich das verwendete Fasermaterial durchfärben lässt.

5. Bausatz nach einem der Ansprüche 1 bis 4, **dadurch gekennzeichnet, dass** dieser an Wandelementen **(1)** zumindest umfasst:
a) ein erstes Wandelement **(11)** mit gerader Erstreckung bezüglich der Vertikalebene;
b) ein zweites Wandelement **(12)** mit erster Krümmung bezüglich der Vertikalebene;
c) ein drittes Wandelement **(13)** mit zweiter Krümmung bezüglich der Vertikalebene; und
d) ein viertes drei-flügliges Wandelement **(14)** mit drei Anschlussflanken **(100);** wobei
e) die Wandelemente **(1;11-13)** mit einer Oberkante **(103)** abschliessen.

6. Bausatz nach Anspruch 5, **dadurch gekennzeichnet, dass** das vierte Wandelement **(14):**
a) aus drei aneinandergefügten Teilelementen **(18)** besteht, welche sich aus der theoretischen vertikalen Halbierung der Dicke der übrigen Wandelemente **(11-13)** ergeben und oben mit einer Teilkante **(183)** abschliessen;
b) an seinen drei Flügeln jeweils eine komplette Abschlussflanke **(100)** mit den beidseitigen Konturen **(105)** und einen kompletten sich zum Elementezentrum erstreckenden Wandungsabschnitt **(108)** hat; wobei
c) sich entlang des Wandungsabschnitts **(108)** eine konturierte komplette Oberkante **(103)** ergibt und im Elementezentrum ein im Prinzip dreiecksförmiger Freiraum entsteht.

7. Bausatz nach einem der Ansprüche 5 und 6, **dadurch gekennzeichnet, dass** die Oberkanten **(103)** an den ersten bis dritten Wandelementen (**11-13**) sowie die am vierten Wandelement **(14)** aus zwei Teilkanten **(183)** zusammengefügte Oberkante **(103)** nachbearbeitungsfrei beim Pressvorgang erzeugt ist.

8. Bausatz nach einem der Ansprüche 5 bis 7, **dadurch gekennzeichnet, dass** am vierten Wandelement **(14)** ein Flügel, welcher von der zugehörigen Anschlussflanke **(100)** und dem sich davon fortsetzenden Wandungsabschnitt **(108)** gebildet wird, jeweils zusammen mit einem benachbarten Flügel einen gleichgrossen ersten Winkel aufspannt, während die beiden benachbarten Flügel zusammen einen anders dimensionierten zweiten Winkel aufspannen.

9. Bausatz nach einem der Ansprüche 6 bis 8, **dadurch gekennzeichnet, dass**
a) die Wandelemente **(1;11-13)** und das Teilelement **(18),** insbesondere in der Horizontalebene, wirkende Versteifungsmittel **(109)** enthält; wobei
b) die Versteifungsmittel **(109)** durch materialverdichtendes Einpressen, mit dem Ergebnis linienförmig und horizontal verlaufender Nuten über die Wandung **(108)** bzw. Teilwandung **(188)** erzeugt sind;
c) die Versteifungsmittel **(109)** an den Wandelementen **(1;11-13)** auf der Frontseite **(F)** und auf der Rückseite **(R)** zueinander kongruent und im gleichen Raster wie die Konturen **(105)** angebracht sind; während
d) die Versteifungsmittel **(109)** am Teilelement **(18)** nur einseitig und im gleichen Raster wie die Teilkonturen **(185)** vorgesehen sind.

10. Bausatz nach einem der Ansprüche 1 bis 9, **dadurch gekennzeichnet, dass** sich mit den Wandelementen (**1;11-14**) und Verbindern **(3,3')** errichten lassen:
a) gerade, einfach oder mehrfach gekrümmte Raumteiler; und/oder
b) einzelne Kabinen; und/oder
c) zusammenhängende Kabinen; und
d) Kombinationen von Raumteilern und Kabinen.

11. Bausatz nach einem der Ansprüche 1 bis 10, **dadurch gekennzeichnet, dass** an den Verbindern **(3,3')** fixierbare Adapter **(4,4')** vorgesehen sind, welche zur Abstützung von Tragflächen **(5)** und/oder Sitzen **(6)** dienen.

12. Bausatz nach Anspruch 11, **dadurch gekennzeichnet, dass**
a) ein Adapter **(4,4')** aus einem Basisteil **(40,40')** mit einer ersten Hakenkontur **(44,44')** und einem separaten Gegenstück **(46,46')** mit einer zweiten Hakenkontur **(48,48')** besteht; und
b) im montierten Zustand Basisteil **(40,40')** und Gegenstück **(46,46')** miteinander verbunden sind und deren erste Hakenkontur **(44,44')** und zweite Hakenkontur **(48,48')** zum Eingriff in einen Zwischenraum **(34,34')** am Verbinder **(3,3')** bestimmt sind.

13. Bausatz nach einem der Ansprüche 11 oder 12, **dadurch gekennzeichnet, dass** dieser ferner Stützen **(7,7')** umfasst, welche den Wandelementen **(1),** aus den der Raumteiler zu errichten ist, vorzugsweise in das Innere des Raumteilers vorgesetzt sind, wobei die einzelne Stütze **(7,7')** aufweist:
a) ein profiliertes Rohrstück mit einer Rückseite **(70,70')** und einer Frontseite **(71,71'),** die miteinander durch einen Mittelsteg **(78,78')** verbunden sind;
b) auf der Rückseite **(70,70')** ein doppelreihiges Schlitzraster **(72,72'),** wobei jeweils die zwei Schlitze eines Paars auf gleicher Höhe liegen;
c) im Mittelsteg **(78,78')** einen die Stütze **(7,7')** durchlaufenden Schraubkanal **(79,79'),** welcher zur Befestigung einer Bodenbaugruppe **(73,73')** nutzbar ist; und
d) eine Bodenbaugruppe **(73,73')** umfasst ein auf einem Bolzen **(75)** in der Höhe nivellierbares Bodenelement **(76)** sowie ein quaderförmiges Fügeteil **(74),** welches man auf das untere Ende der Stütze **(7,7')** aufsteckt, wobei ein Gewindeteil des Bolzens **(75)** zum Eingriff in den Schraubkanal **(79,79')** bestimmt ist.

14. Bausatz nach einem der Ansprüche 11 bis13, **dadurch gekennzeichnet, dass**
a) der Adapter **(4,4')** mit einer Brückenstrebe **(66)** verbindbar ist, und zwischen zwei Brückenstreben **(66)** eine Längsstrebe **(68)** einfügbar ist, so dass ein Gerüst **(60)** entsteht, welches zur Abstützung von Tragflächen **(5)** und/oder Sitzen **(6)** dient;
b) die beiden Hakenkonturen **(44,48;44',48')** eines Adapters **(4,4')** zum Eingriff in die beiden Schlitze eines für die gewünschte Höhe ausgewählten Paars am Schlitzraster **(72,72')** der Stütze **(7,7')** bestimmt und im montierten Zustand darin klauenförmig verkrallt sind; und
c) die an den Stützen **(7,7')** angedockten Adapter **(4,4')** zur Halterung von Tragflächen **(5)** dienen, wobei diese Tragflächen **(5)** als Arbeitsfläche und/oder Ablage oder zum Anbau von Schrankeinheiten **(54)** nutzbar sind.

## Claims

1. A construction kit comprising wall elements (1, 2) and connectors (3, 3') to be inserted therebetween in order to erect room dividers, wherein
a) the wall elements (1, 2) are produced by compressing fiber material and comprise at least one connecting flank (100, 20) systematically provided with contours (105, 25);
b) the connectors (3, 3') are arranged in the form of profiled rails on which at least one connection (30, 30') is provided, which comprises systematically arranged mating contours (35, 35');
c) the contours (105, 25) of the wall elements (1,2) are capable of a form-fit engagement with the mating contours (35, 35') of the connectors (3, 3');
d) the contours (105, 25) of the connecting flanks (100, 20) of the wall elements (1, 2) are arranged congruently on their front side (F) and rear side (R) and are arranged as raised webs running along a vertical line;
e) the connectors (3, 3') each have a connection (30, 30') to the systematic mating contours (35, 35') on two opposite outer edges;
f) the mating contour (35, 35') are arranged as raised pairwise webs which run on a vertical line and narrow the lateral mouth of a vertical groove (36, 36');
g) the contours (105, 25) raise from a lip (106.26) which extends from the connecting flank (100, 20), and the width of the lip (106, 26) finds space in the mouth gap of the mating contours (35, 35'); and
h) the dimensioning of the contours (105, 25) allows inserting the contours through the intermediate spaces (34, 34') on the connector (3, 3'),
**characterized in that**
the contours (105, 25) of the connecting flanks (100, 20) of the wall elements (1, 2) run on the vertical line with alternating intermediate spaces (104) and the mating contours (35, 35') run on the vertical line with alternating intermediate spaces (34, 34').

2. The construction kit according to claim 1, **characterized in that**
a) the fiber material used for producing the wall elements (1, 2) is a compressed polyester nonwoven fabric or a mixture of natural and synthetic fibers and
b) the connector (3, 3') is an extruded profile.

3. The construction kit according to claim 1 or 2, **characterized in that**
a) in the wall elements (1; 11-14) to be installed within a room divider all vertical outer edges are connecting flanks (100) arranged with the systematic contours (105), wherein a wall (108) extends between the connecting flanks (100); and
b) a separate type of wall elements (2) is arranged for the outer termination on room dividers, said outer termination being formed only on an outer edge as connecting flank (20) with the systematic contours (25), wherein the connecting flank (20) adjoins a wing section (21) with a lateral free end.

4. The construction kit according to claim 2, **characterized in that** the fiber material used is color dyeable.

5. The construction kit according to one of claims 1 to 4, **characterized by** comprising at the wall elements (1) at least:
a) a first wall element (11) with a linear extension with respect to the vertical plane;
b) a second wall element (12) with a first curvature with respect to the vertical plane;
c) a third wall element (13) with a second curvature with respect to the vertical plane; and
d) a fourth three-winged wall element (14) with three connecting flanks (100);
e) wherein the wall elements (1; 11-13) end with an upper edge (103).

6. The construction kit according to one of claims 5, **characterized in that** the fourth wall element (14):
a) consists of three joined partial elements (18), which result from the theoretical vertical bisection of the thickness of the remaining wall elements (11-13) and end at the top with a partial edge (183);
b) on each of its three wings thereof, has a complete flank (100) with the contours (105) on both sides and a complete inner wall section (108) extending to a center of the fourth wall element; wherein
c) a contoured complete upper edge (103) results on the inner wall section (108) and an essentially triangular free space is formed in the element center.

7. The construction kit according to one of claims 5 and 6, **characterized in that** the upper edges (103) on the first to third wall elements (11-13) and the upper edge (103) joined together from two partial edges (183) on the fourth wall element (14) are produced without a finishing step during the pressing operation.

8. The construction kit according to one of claims 5 to 7, **characterized in that** on the fourth wall element (14) a wing, which is formed by the associated connecting flank (100) and a wall section (108) continuing therefrom, together with each adjacent wing forms a first angle of identical dimension, wherein the two adjacent wings together form a differently dimensioned second angle.

9. The construction kit according to one of claims 6 to 8, **characterized in that**
a) the wall elements (1; 11-13) and the partial element (18) contain reinforcing means acting in particular in the horizontal plane; wherein
b) the reinforcing means (109) are produced by material-densified pressing resulting in grooves running linearly and horizontally over the inner wall (108) or partial inner wall (188);
c) the reinforcing means (109) on the wall elements (1; 11-13) are congruent to one another on the front side (F) and on the rear side (R) and are arranged in the same grid as the contours (105); while
d) the reinforcing means (109) on the partial element (18) are provided only on one side and in the same grid as partial contours (185).

10. The construction kit according one of claims 1 to 9, **characterized in that** with the wall elements (1; 11-14) and connectors (3, 3') the following can be erected:
a) room dividers which are linear, or are curved once or more than once; and/or
b) individual booths; and/or
c) interconnecting booths; and
d) combinations of room dividers and booths.

11. The construction kit according to one of claims 1 to 10, **characterized in that** fixable adapters (3, 3') are provided on the connectors (3, 3'), which serve to sustain support surfaces (5) and/or seats (6).

12. The construction kit according to claim 11, **characterized in that**
a) an adapter (4, 4') consists of a base part (40, 40') with a first hook contour (44, 44') and a separate counterpart (46, 46') with a second hook contour (48, 48'); and
b) in the fitted state, base part (40, 40') and counterpart (46, 46') are connected to each other and the first hook contour (44, 44') and the second hook contour (48, 48') thereof are arranged to engage in an intermediate space (34, 34') of the connector (3, 3').

13. The construction kit according to one of claims 11 or 12, **characterized in that** it further comprises supports (7,7") which are placed in front of the wall elements (1) from which the partition is to be erected, preferably in the interior of the partition, the single support (7,7") comprising:
a) a profiled tubular piece with a rear side (70, 70) and a front side (71 ,71') connected to each other by a central web (78,78');
b) on the rear side (70,7"), a double row slot grid (72,72), the two slots of each pair being at the same height;
c) in the central web (78, 78') a screw channel (79, 79') passing through the support (7, 7), which can be used for fastening a floor assembly (73, 73'); and
d) a floor assembly (73, 73') comprises a floor element (76) which is height-adjustable on a bolt (75) and a cuboidal joining part (74) which is fitted onto the lower end of the support (7, 7'), wherein a threaded part of the bolt (75) is intended for engagement in the screw channel (79, 79').

14. The construction kit according to one of claims 11 to 13, **characterized in that**
a) one of the adapters (4, 4') is connectable to a bridge strut (66), and a longitudinal strut (68) can be inserted between two bridge struts (66), such that a framework (60) is generated, which serves for sustaining supporting surfaces (5) and/or seats (6);
b) both hook contours (44, 48, 44', 48') of an adapter (4, 4') are arranged for engaging the two slots of a pair of slots, which is selected for the desired height on the slot grid (72, 72') of the support (7, 7') and, in the mounted state, grip therein in the form of claws; and
c) the adapters (4, 4') which are docked on the supports (7, 7') serve for holding supporting surfaces (5), wherein said supporting surfaces (5) can be used as a working surface and/or as a tray or for the attachment of cupboard units (54).

## Revendications

1. Kit constitué d'éléments de paroi **(1,2)** et d'éléments de liaison **(3,3')** à insérer entre lesdits éléments de paroi et permettant d'ériger des cloisons, dans lequel
a) les éléments de paroi **(1,2)** sont réalisés par compression de matériau fibreux et possèdent au moins un flanc de raccord **(100,20)** qui est systématiquement pourvu de contours **(105,25)** ;
b) les éléments de liaison **(3,3')** sont conçus comme un rail profilé, sur lequel se trouve au moins un raccord **(30,30')** qui possède des contre-contours **(35,35')** disposés systématiquement ;
c) les contours **(105,25)** peuvent être amenés en prise par complémentarité de forme avec les contre-contours **(35,35')** sur les éléments de liaison **(3,3')** au niveau des éléments de paroi **(1,2)** ;
d) les contours **(105,25)** sont disposés sur les flancs de raccord **(100,20)** des éléments de paroi **(1,2)** de manière congruente sur leur côté avant **(F)** et leur côté arrière **(R)** et sont conçus comme des barres élevées, lesquelles s'étendent sur une ligne verticale ;
e) les éléments de liaison **(3,3')** possèdent respectivement un raccord **(30,30')** comportant les contre-contours systématiques **(35,35')** sur deux bords extérieurs opposés ;
f) les contre-contours **(35,35')** sont formés comme des barres élevées par paires, lesquelles s'étendent sur une ligne verticale et rétrécissent l'embouchure latérale d'une rainure verticale **(36,36')** ;
g) les contours **(105,25)** s'élèvent à partir d'une lèvre **(106,26),** laquelle s'étend depuis le flanc de raccord **(100,20)** et la largeur de la lèvre **(106,26)** trouve de l'espace dans la fente de l'embouchure des contre-contours **(35,35')** ; et
h) le dimensionnement des contours **(105,25)** permet leur insertion à travers les interstices **(34,34')** de l'élément de liaison **(3,3'),**
**caractérisé en ce que**
les contours **(105,25)** s'étendent sur les flancs de raccord **(100,20)** des éléments de paroi **(1,2)** sur la ligne verticale avec des interstices alternés **(104)** et les contre-contours **(35,35')** s'étendent sur la ligne verticale avec des interstices alternés **(34,34').**

2. Kit selon la revendication 1, **caractérisé en ce que**
a) le matériau fibreux utilisé pour fabriquer les éléments de paroi **(1,2)** est un non-tissé de polyester compressé ou un mélange de fibres naturelles et synthétiques ; et
b) l'élément de liaison **(3,3')** est un profilé extrudé.

3. Kit selon l'une des revendications 1 et 2, **caractérisé en ce que**
a) tous les bords extérieurs verticaux sont formés comme flancs de raccord **(100)** comportant les contours systématiques **(105)** sur les éléments de paroi **(1;11-14),** lesquels sont destinés à l'installation à l'intérieur d'une cloison, une paroi **(108)** s'étendant entre les flancs de raccord **(100)** ; et
b) un type distinct d'éléments de paroi **(2)** est destiné à la fermeture extérieure des cloisons et est formé uniquement sur un bord extérieur comme flanc de raccord **(20)** comportant les contours systématiques **(25),** une section d'aile **(21)** étant raccordée au flanc de raccord **(20)** et se terminant librement sur le côté.

4. Kit selon la revendication 2, **caractérisé en ce que** le matériau fibreux utilisé peut être teinté.

5. Kit selon l'une des revendications 1 à 4, **caractérisé en ce qu'**il comprend au moins les éléments de paroi **(1)** suivants :
a) un premier élément de paroi **(11)** comportant une extension rectiligne par rapport au plan vertical ;
b) un deuxième élément de paroi **(12)** comportant une première courbure par rapport au plan vertical ;
c) un troisième élément de paroi **(13)** comportant une seconde courbure par rapport au plan vertical ; et
d) un quatrième élément de paroi à trois ailes **(14)** comportant trois flancs de raccord **(100)** ;
e) les éléments de paroi **(1;11-13)** se terminant par un bord supérieur **(103).**

6. Kit selon la revendication 5, **caractérisé en ce que** le quatrième élément de paroi **(14)** :
a) se compose de trois éléments partiels joints **(18),** lesquels résultent de la division verticale théorique par deux de l'épaisseur des éléments de paroi **(11-13)** restants et se terminent par un bord partiel **(183)** en haut ;
b) dispose respectivement sur ses trois ailes d'un flanc de raccord complet **(100)** comportant des contours **(105)** de part et d'autre et d'une section de paroi complète **(108)** s'étendant jusqu'au centre de l'élément ;
c) un bord supérieur complet profilé **(103)** résultant le long de la section de paroi **(108)** et un espace libre sensiblement triangulaire étant créé au centre de l'élément.

7. Kit selon l'une des revendications 5 et 6, **caractérisé en ce que** les bords supérieurs **(103)** des premier à troisième éléments de paroi **(11-13)** ainsi que le bord supérieur **(103)** assemblé sur le quatrième élément de paroi **(14)** à partir de deux bords partiels **(183)** sont générés sans post-traitement lors du processus de pressage.

8. Kit selon l'une des revendications 5 à 7, **caractérisé en ce qu'**une aile, laquelle est formée par le flanc de raccord **(100)** associé et la section de paroi **(108)** se prolongeant à partir dudit flanc de raccord, forme respectivement conjointement avec une aile adjacente un premier angle identique sur le quatrième élément de paroi **(14),** tandis que les deux ailes adjacentes forment conjointement un second angle de dimensions différentes.

9. Kit selon l'une des revendications 6 à 8, **caractérisé en ce que**
a) les éléments de paroi (**1**;**11-13**) et l'élément partiel **(18)** contiennent des moyens de rigidification **(109)** agissant en particulier dans le plan horizontal ;
b) les moyens de rigidification **(109)** sont générés par pressage comprimant le matériau, avec pour résultat des rainures linéaires et horizontales sur la paroi **(108)** ou la paroi partielle **(188)** ;
c) les moyens de rigidification **(109)** sur les éléments de paroi (**1;11-13)** sont appliqués de manière congruente les uns aux autres sur le côté avant **(F)** et sur le côté arrière **(R)** et sont fixés dans la même grille que les contours **(105)** ; tandis que
d) les moyens de rigidification **(109)** ne sont prévus que d'un côté sur l'élément partiel **(18)** et dans la même grille que les contours partiels **(185).**

10. Kit selon l'une des revendications 1 à 9, **caractérisé en ce que** les éléments de paroi (**1**;**11-14**) et les éléments de liaison **(3,3')** permettent d'ériger :
a) des cloisons droites, simples ou multiples ; et/ou
b) des cabines individuelles ; et/ou
c) des cabines reliées ; et
d) des combinaisons de cloisons et de cabines.

11. Kit selon l'une des revendications 1 à 10, **caractérisé en ce que** des adaptateurs **(4,4')** pouvant être fixés sur les éléments de liaison **(3,3')** sont prévus et servent à supporter des surfaces d'appui **(5)** et/ou des sièges **(6).**

12. Kit selon la revendication 11, **caractérisé en ce que**
a) un adaptateur **(4,4')** se compose d'une partie de base **(40,40')** comportant un premier contour en crochet **(44,44')** et d'une contrepartie séparée **(46,46')** comportant un second contour en crochet **(48,48')** ; et
b) à l'état assemblé, la partie de base **(40,40')** et la contrepartie **(46,46')** sont reliées l'une à l'autre et leur premier contour en crochet **(44,44')** et second contour en crochet **(48,48')** sont destinés à venir en prise dans un espace intermédiaire **(34,34')** sur l'élément de liaison **(3,3').**

13. Kit selon l'une des revendications 11 ou 12, **caractérisé en ce qu'**il comprend en outre des supports **(7,7'),** lesquels sont placés devant les éléments de paroi **(1)** à partir desquels la cloison doit être érigée, de préférence à l'intérieur de la cloison, le support unique **(7,7')** présentant :
a) un morceau de tuyau profilé comportant un côté arrière **(70,70')** et un côté avant **(71,71')** reliés l'un à l'autre par une barre centrale **(78,78')** ;
b) une grille de fentes à double rangée **(72,72')** sur le côté arrière **(70,70'),** les deux fentes d'une paire étant respectivement situées à la même hauteur ;
c) un canal de vis **(79,79')** traversant le support **(7,7')** dans la barre centrale **(78,78'),** lequel canal de vis peut être utilisé pour fixer un ensemble plancher **(73, 73')** ; et
d) un ensemble plancher **(73,73')** comprenant un élément de plancher (76) qui peut être ajusté en hauteur sur un boulon **(75)** et une partie de jonction en parallélépipède **(74)** qui est fixée à l'extrémité inférieure du support **(7,7'),** une partie filetée du boulon **(75)** étant destinée à venir en prise dans le canal de vis **(79,79').**

14. Kit selon l'une des revendications 11 à 13, **caractérisé en ce que**
a) l'adaptateur **(4,4')** peut être relié à une entretoise de pontage **(66),** et une entretoise longitudinale **(68)** peut être insérée entre deux entretoises de pontage **(66)** de façon à créer un cadre **(60),** lequel sert à supporter des surfaces d'appui **(5)** et/ou des sièges **(6)** ;
b) les deux contours en crochet **(44,48;44',48')** d'un adaptateur **(4,4')** sont destinés à venir en prise dans les deux fentes d'une paire sélectionnée pour la hauteur souhaitée sur la grille de fentes **(72, 72')** des supports **(7,7')** et y sont accrochés en forme de griffes à l'état assemblé ; et
c) les adaptateurs **(4,4')** ancrés aux supports **(7,7')** servent à maintenir des surfaces d'appui **(5),** lesdites surfaces d'appui **(5)** pouvant être utilisées comme surfaces de travail et/ou dépôt ou pour le montage d'unités d'armoire **(54).**
